# EUROPÄISCHE PATENTSCHRIFT

(11) **EP 3 850 342 B1**
(45) Veröffentlichungstag und Bekanntmachung des Hinweises auf die Patenterteilung: **15.04.2026**
(21) Anmeldenummer: 19768735.3
(22) Anmeldetag: 04.09.2019
(51) Int. Cl.: G01N 21/64, G01N 21/65, G01J 3/02, G01J 3/12, G01J 3/44, G01N 21/05

(54) **VORRICHTUNG UND VERFAHREN ZUR MESSUNG VON STREULICHT UND VERWENDUNG BEISPIELSWEISE AN KLÄRANLAGEN**
DEVICE AND METHOD FOR MEASURING SCATTERED LIGHT AND THEIR USE, FOR EXAMPLE, IN SEWAGE PLANTS
DISPOSITIF ET PROCÉDÉ POUR MESURER DE LA LUMIÈRE DIFFUSÉE ET LEUR UTILISATION, PAR EXEMPLE, DANS DES STATIONS D'ÉPURATION DES EAUX USÉES

(30) Priorität: 14.09.2018 DE 102018122578
(43) Veröffentlichungstag der Anmeldung: 21.07.2021
(73) Patentinhaber: Hochschule Mannheim, 68163 Mannheim (DE)
(72) Erfinder: BRAUN, Frank, 69226 Nußloch (DE); HIEN, Andreas, 68161 Mannheim (DE); RÄDLE, Matthias, 67273 Weisenberg/Berg (DE)
(74) Vertreter: Blumbach · Zinngrebe Patentanwälte PartG mbB
(86) Internationale Anmeldenummer: PCT/EP2019/073582
(87) Internationale Veröffentlichungsnummer: WO 2020/053045

(56) Entgegenhaltungen:
- EP-A2- 2 602 611
- WO-A1-2010/111508
- WO-A2-2012/019102
- DE-U1- 202004 007 868
- US-A1- 2006 176 478
- US-B2- 9 513 225

## Beschreibung

### Gebiet der Erfindung

Die Erfindung betrifft eine Vorrichtung und ein Verfahren zur Messung von Streulicht, insbesondere von Raman-gestreutem, fluoreszentem und/oder phosphoreszentem Licht, insbesondere anwendbar sowohl für trübe als auch für klare fluide Medien und transparente oder leicht trübe Feststoffe, sowie die Verwendung zur Überwachung des Auslaufs an Kläranlagen oder anderer Abwässer.

### Hintergrund der Erfindung

Der Raman-Effekt ist gegenüber anderen optischen Analyseverfahren durch kleine Wirkungsquerschnitte und inelastisch gestreute Photonen gekennzeichnet. Daher hat insbesondere die Raman-Spektroskopie mit einem vergleichsweise schwachen Messeffekt und entsprechend geringen Photonenströmen zu kämpfen. Dies gilt allerdings auch für Fluoreszenz- und Phosphoreszenz-Effekte.

In der bekannten Raman-Spektroskopie korrespondiert die für eine molekulare Selektivität notwendige Wellenlängenauflösung typischerweise mit einer Ortsauflösung bei Verwendung von üblichen dispersiven optischen Elementen. Beispielsweise können konventionelle Monochromatoren eingesetzt werden. Dabei führt ein größerer Eintrittspalt zu einer schlechteren Wellenlängenauflösung, andererseits zu einer erhöhten Lichtleistung auf dem Detektor. Aus den dem Fachmann bekannten Abbildungsgleichungen ergibt sich weiterhin, dass nur kleine Objekte auf kleine Flächen abgebildet werden können. Die Zusammenhänge sind über die Helmholtz-Lagrange-Gleichung ganz generell beschrieben und dem Fachmann bekannt und benötigen daher keiner weiteren Erläuterung. Daher können mit diesen Prinzipien typischerweise nur kleine Objekte mit hoher Wellenlängenauflösung spektroskopisch gemessen oder erfasst werden. Die Pixelgrößen als eigentlicher Nachweis der nachweisenden CCD/CMOS-Elemente sind gegeben durch eine Breite von z.B. 20 µm oder 25 µm - oft auch darunter und einer Pixelhöhe von 500 µm manchmal auch etwas darüber. Dennoch kann eine Eintrittsfläche, die zu detektieren ist, nicht wesentlich größer sein als die Fläche der Pixel.

Teilweise kommen in den in der Literatur beschriebenen und käuflichen Systemen Querschnittswandler zum Einsatz, die eine rundgeformte Eintrittsöffnung auf der Sondenseite aufweisen. Dabei tritt das Licht in ein Spektrometer ein und wird auf einen Schlitz geformt, der gerade diesen Maßen (z.B. 25 x 500 µm²) entspricht. Damit entsprechen runde Eintrittsöffnungen von ca. 100 µm oder 200 µm, in den größten Ausführungsformen mit Pixelgrößen in der Höhe bis 2,5 mm (oft mittels horizontalem Binning) runde Eintrittsöffnungen von 600 µm. Damit können bei vorgegebenem, und in der üblichen technischen Ausführung auch nur wenig variierbarem, Aperturwinkel nur Objekte von ca. 0,6 mm Durchmesser abgebildet werden. Die üblichen Messsonden bilden von dem Strahlweg auch typischerweise nur ein bestimmtes VolumenElement direkt vor der Sensor-Spitze ab.

In der Raman-Spektroskopie wird in einer Probe pro etwa 10⁸ bis 10¹¹ eingeschossenen Photonen im Mittel nur ein einziges Photon den Raman-Effekt erfahren. Dadurch sind die üblichen Anwendungen für Raman Spektroskopie und auch für Raman Photometrie auf Bereiche relativ hoher Konzentrationen beschränkt und/oder konventionelle Raman-Spektrometer werden mit sehr starken Laserlichtquellen ausgestattet. Hier kommen typisch bis zu 500 mW Laserleistung oder auch mehr zur Anwendung. Detektionsseitig werden häufig höchstempfindliche Zeilendetektoren oder Flächendetektoren (CCD, EMCCD, CMOS, sCMOS) z.B aus dem Wissenschafts- und Astronomiebereich eingesetzt, sowie Detektoren für die zeitaufgelöste Spektroskopie. Diese werden in der Regel zur Reduktion des thermischen Rauschens ein- oder mehrstufig mittels Peltierelementen oder mittels flüssigem Stickstoff gekühlt.

Solche Systeme sind zumeist aufwändig und kostenträchtig, um ausreichende Nachweisempfindlichkeiten zu erzielen.

Die derzeit mit der Raman-Spektroskopie untersuchbaren Konzentrationen starten mit typischerweise 0,1 % Volumen- oder Massenkonzentration und erstrecken sich bis 100 % Volumen- oder Massenkonzentration. Hier finden sich Anwendung in Laboren, in der Chemieindustrie etc.

Ein für die Erfindung beispielhaftes und von bisherigen Geräten nicht bedienbares Anwendungsfeld ist die Mess- und Regelungstechnik in Kläranlagen. Allein in Deutschland werden größenordnungsmäßig 10.000 öffentliche Kläranlagen betrieben. Hierbei werden etwa 10 Mrd. m³ Abwasser (bestehend aus rund 5 Mrd. m³ Schmutzwasser und rund 5 Mrd. m³ Fremd- und Niederschlagswasser) gereinigt und in Oberflächengewässer eingeleitet. Der Umsatz im Bereich der Abwasserreinigung liegt in Deutschland bei mehreren Milliarden Euro pro Jahr. Dennoch sind weiteres Wachstum und Investitionen zu erwarten. Dabei spielt sowohl der Ausbau von Kapazitäten als auch eine Qualitätssteigerung über den Ausbau der Mess- und Regelungstechnik eine Rolle.

Die Anwendung von Raman-Spektroskopie in der Untersuchung von Wasser bzw. Detektion von Mikroorganismen ist z.B. in "Identification of water pathogens by Raman microspectroscopy" in Water Research, 48 (2014), 179-189 und "The application of Raman spectroscopy for the detection and identification of microorganisms" in Journal of Raman Spectroscopy, 2016, 47, 89-109 beschrieben. Weitere Grundlagen und beispielhafte Lichtquellen sind z.B. in ChemPhysChem 2003, 4, 14-30 beschrieben.

Bei einer Kläranlage handelt es sich um ein hochkomplexes System, das sowohl aus mechanischen- (Vorreinigung), biologischen- und abiotisch-chemischen Stufen, besteht. In den mechanischen Stufen werden ca. 20 bis 30 % der ungelösten Schwimm- und Schwebstoffe eliminiert. In der zweiten Stufe werden biologische Operationen eingesetzt, welche sich mikrobiologischer Abbauvorgänge bedienen - mit dem Ziel abbaubare organische Substanzen möglichst vollständig zu mineralisieren. Dies heißt die Stoffe werden bis zu den Endprodukten Wasser, Kohlendioxid, Nitrat, Phosphat und Sulfat aerob abgebaut.

Durch einen anaeroben Prozess werden Kohlenstoffverbindungen zu Säuren, Methan und Kohlendioxid umgesetzt. Der organisch gebundene Stickstoff und das Ammonium werden durch bakterielle Nitri- und Denitrifikationsstufen umgesetzt und so der Stickstoffgehalt drastisch gesenkt. Die biologische Stufe ist sehr sensibel auf Hemmstoffe. Bei schlecht gepufferten Wässern können diese zu einer pH-Wert-Änderung führen und im schlimmsten Fall den Abbauprozess stoppen.

In der nachgeschalteten abiotisch-chemischen Stufe wird hauptsächlich Phosphor durch Fällungsreaktionen (Phosphorelimination) entfernt, um eine Eutrophierung (Anreicherung mit Nährstoffen) des Vorfluters zu vermeiden.

Zur Kontrolle der schwierig zu beherrschenden Zustände in Kläranlagen wird dabei ein hoher messtechnischer Aufwand, besonders im Bereich Wasser- und Abwasseranalytik, betrieben. Veröffentlicht wurden vor allem Messtechniken in den Bereichen.
- Trübungsmesstechnik
- UV/VIS-, NIR-, Fluoreszenz- und Ramanspektroskopie.

Bei der molekülselektiven Ramantechnik können jedoch kleinste Nachweisgrenzen, bisher typischerweise nur mit Raman-SERS-Techniken, also oberflächenverstärktem Raman, nachgewiesen werden. Diese Technik ist jedoch in Kläranlagen nur unzulänglich oder gar nicht prozessrobust einsetzbar.

Besonders häufig ist der Fall, dass die Proben, die mit Raman vermessen werden sollen, nahezu wasserklar sind. In diesem Fall geht das meiste Licht einfach durch das Probenvolumen hindurch. Dadurch gehen z.B. 99,999999 % des Lichtes verloren, was die Nachweismöglichkeiten weiter verringert.

Aus der WO 2010/111508 A1 ist ein System mit linearen Anordnungen jeweils mit einer Mehrzahl von optischen Fasern und einem ND:YAG-Laser zur Fluoreszenzspektroskopie bekannt.

Aus der EP 2 602 611 A2 sind eine Hochdruck Fluoreszenz-Flusszellenanordnung, ein Fluoreszenzdetektor und ein superkritischer Fluid-Chromatograph (SFC) bekannt. SFCs verwenden UV-VIS Absorptionsdetektoren, ELSDs und Massenspektrometer und die Flusszelle muss einem Druck von 10 MPa oder höher standhalten.

Aus der WO 2012/019102 A2 ist ein portables Diagnosesystem mit einem durchstimmbaren Laser für die klinische Diagnose von z.B. malignen Tumoren oder Arteriosklerose bekannt. Es wird ein LCTF oder AOTF z.B. für eine Glukosemessung eingesetzt.

Die US 2006/01764478 A1 beschreibt Ramanspektroskopie mit stabilisierten Multimodenlasern zur chemischen Analyse von organischen Komponenten in einer Probenkammer.

Das Gebrauchsmuster DE 20 2004 007 868 U1 beschreibt eine Messsonde mit einem flüssigkeitsdichten Gehäuse und einen Detektor zur Detektion eines Fluoreszenzspektrums.

Das US-Patent 9,513,225 B2 betrifft ein Verfahren und ein System zur Verbesserung der Auflösung eines Spektrometers mit einem optischen Medium mit vorbestimmter abstimmbarer spektraler Transmissionskurve.

### Allgemeine Beschreibung der Erfindung

Es ist daher eine Aufgabe der vorliegenden Erfindung, eine Vorrichtung und ein Verfahren zur Messung von Streulicht, insbesondere von Raman-gestreutem, fluoreszentem und/oder phosphoreszentem Licht bereit zu stellen, welche eine hohe Empfindlichkeit bzw. Nachweiseffizienz aufweist und insbesondere zur Messung in trüben und in klaren bzw. transparenten fluiden und festen Medien geeignet ist.

Ein weiterer Aspekt der Aufgabe ist es, eine Vorrichtung und ein Verfahren zur Messung von Streulicht, insbesondere von Raman-gestreutem, fluoreszentem und/oder phosphoreszentem Licht bereit zu stellen, welche zur Messung an gering konzentrierten fluiden oder festen Medien geeignet ist.

Ein weiterer Aspekt der Aufgabe ist es, eine Vorrichtung und ein Verfahren zur Messung von Streulicht, insbesondere von Raman-gestreutem, fluoreszentem und/oder phosphoreszentem Licht bereit zu stellen, welche prozessrobust für die Mess- und Regeltechnik in der Abwasserklärung geeignet ist.

Gemäß einem Aspekt der vorliegenden Erfindung wird eine Vorrichtung zur Messung von insbesondere in trüben oder klaren fluiden oder trüben oder transparenten festen Medien gestreutem Sekundärlicht gemäß Anspruch 1 bereit gestellt. Fluide Medien können flüssige oder gasförmige Medien sein. Trübe Medien können z.B. Dispersionen sein. Gasförmige trübe Medien können als Aerosole, also z.B. als Nebel oder Rauch vorliegen. Trübe flüssige Medien können z.B. als Suspension vorliegen. Die Vorrichtung umfasst hierfür eine Lichtquelle, welche einen kollimierten, vorzugsweise parallelen Primärlichtstrahl erzeugt, welcher in das zu untersuchende Medium eingestrahlt wird, wobei der Primärlichtstrahl eine Strahlachse in dem zu untersuchenden, vorzugsweise fluiden, also flüssigen oder gasförmigen, oder festen Medium definiert. Mit anderen Worten durchstrahlt der Primärlichtstrahl entlang der Strahlachse das Medium und regt in dem Medium Lichtstreuung, insbesondere Ramanstreuung, Fluoreszenz und/oder Phosphoreszenz, an, so dass das Medium aufgrund der Lichtstreuung entlang der Strahlachse Sekundärlicht mit einem Sekundärlicht-Spektrum emittiert.

Ferner umfasst die Vorrichtung eine Sondenanordnung zum Empfangen und Weiterleiten des entlang der Strahlachse emittierten Sekundärlichtes. Die Sondenanordnung wiederum umfasst eine Mehrzahl von Lichtleitern mit jeweils einer Lichteintrittsspitze mit einer definierten Lichteintrittsfläche, welche an ihren Lichteintrittsspitzen, also an dem probenseitigen Ende der Lichtleiter, an welchem das Sekundärlicht in die Lichtleiter eintritt, quer zur Strahlachse des Primärlichtstrahls verlaufen und nebeneinander in zumindest einer Reihe entlang der Strahlachse angeordnet sind. Mit anderen Worten bildet die Mehrzahl oder Vielzahl von Lichtleitern eine Reihenanordnung oder "Batterie" von Lichtleitern, wobei sich die einzelnen Lichtleiter jeweils quer zur Strahlachse erstrecken und sich die Reihenanordnung der Gesamtheit der Lichtleiter entlang der Strahlachse erstreckt, vergleichbar mit der Anordnung der Zylinder eines Reihenzylindermotors in Bezug auf dessen Kurbelwelle. Quer zur Strahlachse kann vorliegend bedeuten, dass die einzelnen Lichtleiter senkrecht zur Strahlachse oder unter einem spitzen Winkel zu einer Ebene, die sich senkrecht zur Strahlachse erstreckt, verlaufen. Somit können die Lichtleiter solches Sekundärlicht, z.B. Raman-gestreutes Licht empfangen, welches quer zu der Strahlachse emittiert wird, und zwar nicht nur an einer einzelnen Stelle einer einzelnen Lichteintrittsspitze, sondern über eine gewisse Strecke entlang der Strahlachse. Die Reihenanordnung aus den Lichtleitern empfängt demnach das Sekundärlicht über eine ausgedehnte Nachweislänge entlang der Strahlachse des Primärlichtstrahls, wobei die Nachweislänge erheblich größer ist als der Durchmesser eines einzelnen Lichtleiters. Die Länge der Sondenfläche, welche durch die Gesamtheit der Lichtleiter gebildet wird, entspricht der Nachweislänge, also etwa dem Produkt aus Lichtleiterdurchmesser (2*r_{L}) und Lichtleiteranzahl (n_{L}), wobei r_{L} der Durchmesser eines einzelnen Lichtleiters und n_{L} die Anzahl der nebeneinander angeordneten Lichtleiter ist. Daher wird hier auch von einer Multilichtleiter-Lateralsonde gesprochen. Die Gesamt-Lichteintrittsfläche oder Gesamt-Sondenfläche der Reihe von Lichtleitern hat demnach eine längliche Ausdehnung mit einer langen Ausdehnungsrichtung (2*r_{L}*n_{L}) entlang der Strahlachse und einer kurzen Ausdehnungsrichtung (2*r_{L}) quer zur Strahlachse. Die kurze Ausdehnung entspricht bei einer Reihe von Lichtleitern dem Durchmesser (2*r_{L}) eines Lichtleiters und die lange Ausdehnung der Nachweislänge, also dem Produkt aus Lichtleiterdurchmesser mal Anzahl der Lichtleiter (2*r_{L}*n_{L}). Die Gesamt-Sondenfläche A_{G} der Reihenanordnung beträgt demnach A_{G} = π*r_{L}²*n_{L}. Mit einer solchen Reihenanordnung kann demnach das Licht entlang langen Ausdehnung der Sondenfläche also entlang der Nachweislänge empfangen und gesammelt werden. Hierbei soll nicht ausgeschlossen sein, dass einige (wenige) Lichtleiter in der Reihe für besondere Zwecke, wie z.B. eine Trübungsmessung verwendet werden.

Das Licht, das über die länglich ausgedehnte Gesamt-Sondenfläche empfangen wird, wird demnach gesammelt und einer Detektoreinrichtung zum Nachweis zugeführt. Die Vorrichtung umfasst hierzu eine Detektoreinrichtung zum Nachweis des in Richtung quer zu dem Primärlichtstrahl emittierten und von der Mehrzahl der Lichtleiter gesammelten und der Detektoreinrichtung zugeführten Sekundärlichts.

In vorteilhafter Weise kann somit ein Vielfaches an Sekundärlicht, insbesondere Raman-gestreutem Licht entlang der Strahlachse empfangen, gesammelt und nachgewiesen werden, als das was mit einem Lichtleiter oder konventionellen Sonden möglich wäre, was die Nachweiseffizienz erheblich erhöht. Dadurch können in vorteilhafter Weise geringe Konzentrationen in dem Medium untersucht werden, die Laserleistung reduziert werden oder beides.

Die Lichtleiter sind als Kunststofffasern oder Hohlleiter ausgebildet und/oder weisen jeweils einen Lichtleiter-Durchmesser von mindestens 100 µm, vorzugsweise mindestens 200 µm, noch mehr bevorzugt mindestens 500µm auf. Dadurch kann einerseits eine kostengünstige Reihenanordnung aus einer Vielzahl von Lichtleitern gebildet werden und auf der anderen Seite lässt sich eine große Gesamt-Sondenfläche A_{G} erzielen.

Vorzugsweise sind zumindest 5, vorzugsweise zumindest 10, vorzugsweise zumindest 25, vorzugsweise zumindest 40 Lichtleiter nebeneinander in einer Reihe entlang der Strahlachse angeordnet, so dass die Gesamt-Sondenfläche gegenüber einem einzelnen Lichtleiter oder einigen wenigen Lichtleitern vervielfacht werden kann.

Die Gesamt-Sondenfläche bzw. die Gesamtquerschnittsfläche aller Lichtleiter beträgt zusammen mindestens 10 mm², vorzugsweise mindestens 20 mm², vorzugsweise mindestens 40 mm².

Die Vorrichtung umfasst einen Querschnittswandler, welcher die sich länglich linear entlang der Strahlachse erstreckende Gesamt-Lichteintrittsfläche der Lichteintrittsspitzen, also die Gesamt-Sondenfläche A_{G} = π*r_{L}²*n_{L} in eine zweidimensionale Gesamtfläche mit größerer Breite und geringerer Länge als die länglich lineare Gesamt-Lichteintrittsfläche umformt. Z.B. erfolgt die Umformung etwa in einen quadratischen oder kreisförmigen, jedenfalls nicht so länglichen Querschnitt. Dies erfolgt z.B. dadurch, dass die Lichtleiter den Querschnittswandler bilden und deren GesamtQuerschnittsfläche von länglich mit einer Länge von etwa 2*r_{L}*n_{L} auf eher quadratisch oder eher kreisförmig umgeformt wird. Einfach gesagt wird aus einer länglichen Querschnittsform ähnlich 2r_{L *} 2n_{L}r_{L} eine kompakte Querschnittsform ähnlich {2sqrt(n_{L})r_{L}}².

Die Vorrichtung umfasst vorzugsweise eine Küvette mit einem Fluideingang und einem Fluidausgang, so dass das zu untersuchende fluide Medium durch die Küvette geleitet werden kann. Der Primärlichtstrahl wird entlang der Strahlachse durch die vorzugsweise längliche Küvette gestrahlt, so dass das durch die Küvette geleitete Medium im Durchflussbetrieb durch die Küvette von dem Primärlichtstrahl durchstrahlt wird.

Hierzu kann die Küvette an einem ersten Ende ein Primärlichtstrahleintrittsfenster und/oder an einem dem ersten Ende gegenüberliegenden zweiten Ende ein Primärlichtstrahlaustrittsfenster umfassen, durch welche der Primärlichtstrahl in die Küvette, die sich länglich entlang der bzw. um die Strahlachse erstreckt, eintreten und/oder aus der Küvette wieder austreten kann. Dadurch kann in vorteilhafter Weise ein fluides, z.B. flüssiges Medium im Durchflussbetrieb analysiert werden.

Es sind nun verschiedene Ausführungsformen zur Auskopplung des Sekundärlichts wie folgt möglich:
Die Küvette kann eine Seitenwand oder ein sich entlang der Strahlachse erstreckendes Fenster aus einem transparenten oder transluzenten Material aufweisen, so dass das Sekundärlicht durch die Seitenwand bzw. das Fenster aus der Küvette nach außen treten kann. Hierbei kann die Sondenanordnung außerhalb an der Küvette angeordnet sein, um das durch die Seitenwand bzw. das Fenster austretende Sekundärlicht außerhalb der Küvette aufzufangen.

Die Küvette kann auch eine seitliche Öffnung aufweisen, durch welche die Lichtleiter ins Innere der Küvette ragen, so dass die Lichteintrittsspitzen der Lichtleiter sich unmittelbar in dem fluiden Medium befinden, um das in dem fluiden Medium erzeugte Sekundärlicht unmittelbar dort innerhalb der Küvette bzw. innerhalb des fluiden Mediums aufzufangen. Vorzugswiese ist die Öffnung um die Lichtleiter herum abgedichtet, damit eine fluiddichte Küvetten-Sondenanordnung gebildet wird.

Ferner kann die Multilichtleiter-Lateralsonde als eine Immersions- oder Tauchsonde bzw. eine Gasphasen-Raman-Sonde ausgebildet sein. Bei dieser Ausführungsform ist ein Tauchgefäß umfasst, in welchem sich das fluide Medium befindet und die Immersions- oder Tauchsonde wird in das fluide Medium eingetaucht, so dass die Lichteintrittsspitzen innerhalb des Tauchgefäßes in das fluide Medium eintauchen, um das in dem fluiden Medium erzeugte Sekundärlicht unmittelbar in dem fluiden Medium aufzufangen.

Die Lichtausbeute der Multilichtleiter-Lateralsonde kann weiter erhöht werden, wenn ein zylindrischer Hohlspiegel umfasst ist, welcher entlang der Küvette angeordnet ist und das aus der Küvette in verschiedene radiale Richtungen austretende Sekundärlicht auf die Lichteintrittsspitzen der Lichtleiter fokussiert oder wenn die Küvette teilweise (innen-)verspiegelt ist, um das in verschiedene radiale Richtungen emittierte Licht auf die Lichteintrittsspitzen zu fokussieren.

Weiter vorzugsweise kann der zylindrische Hohlspiegel bzw. die verspiegelte Küvette quer zur Strahlachse einen elliptischen Querschnitt aufweisen. Wenn die Strahlachse und/oder die Lichteintrittsspitzen der Lichtleiter in den Brennpunkten der Ellipse angeordnet sind, wird das in verschiedene radiale Richtungen um die Strahlachse emittierte Licht besonders effektiv gesammelt.

Gemäß einer bevorzugten Ausführungsform können sogar mehrere Reihen, z.B. 2, 3, 4 oder mehr Reihen, jeweils mit einer Mehrzahl von Lichtleitern entlang der und um die Strahlachse herum angeordnet sein. Dadurch kann die Gesamt-Sondenfläche weiter vergrößert werden. Es ist auch ein Multiplexingbetrieb möglich, bei dem die einzelnen Reihen nacheinander detektieren können.

Gemäß einer weiteren bevorzugten Ausführungsform können einige (wenige) der dann intermittierend entlang der Längsachse in Reihe angeordneten Lichtleiter zur Absorptionsmessung und/oder Intensitätsmessung und zur Signalkorrektur verwendet werden. Dadurch kann in vorteilhafter Weise gleichzeitig zur Raman-Messung eine Trübungsmessung oder Konzentrationsmessung eines dispersen Mediums (Staub, Tropfen, Partikel...) entlang der Strahlachse durchgeführt werden, z.B. um die Ramansignale aus den Lichtleitern aufeinander zu normieren.

Es ist ein wellenlängenselektives Element umfasst, welches das Sekundärlichtspektrum dispergiert, so dass das Sekundärlicht mittels der Detektoreinrichtung wellenlängenselektiv nachgewiesen werden kann, um zumindest einen Teil des Sekundärlichtspektrums abzubilden und ggf. grafisch darzustellen. Es wird demnach nicht nur eine Wellenlänge und vorzugsweise nicht nur eine Intensität aller Wellenlängen gemessen, sondern zumindest ein Teil des Sekundärlichtspektrums analysiert, so dass die Vorrichtung ein Spektrometer bzw. Raman-Spektrometer bildet.

Das wellenlängenselektive Element ist als ein durchstimmbares Filter ausgebildet, um den zumindest einen Teil des Sekundärlichtspektrums mit der Detektoreinrichtung nachzuweisen. Bei einem durchstimmbaren Filter erfolgt die spektrale Auflösung des Sekundärlichtspektrums zeitlich..

Besonders vorteilhaft im Sinne der Erfindung ist ein flächig ausgedehnter Nachweis.

Als durchstimmbares Filter kommt insbesondere ein akusto-optisch durchstimmbares Filter, d.h. ein sogenanntes AOTF oder ein anderes durchstimmbares Filter in Betracht. In vorteilhafter Weise hat ein AOTF eine große aktive Fläche, welche das Sekundärlicht aus der Vielzahl der Lichtleiter spektral selektieren kann. Es wird diesbezüglich und in Bezug auf mögliche Anwendungen auf die Anmeldung DE 10 2018 106 819.0 vom 22.03.2018 verwiesen, welche hiermit durch Referenz zum Gegenstand der vorliegenden Offenbarung gemacht wird. Ggf. kann noch eine fokussierende Optik zwischen dem Ausgang des Querschnittswandlers und dem durchstimmbaren Filter vorgesehen sein, um das aus dem Querschnittswandler mit großer Austrittsfläche austretende Sekundärlicht auf das durchstimmbare Filter und/oder die Detektoreinrichtung zu fokussieren oder aber das ankommende Licht in für das eingesetzte Filter günstige Auftreffwinkel zu richten.

Die Detektoreinrichtung umfasst zumindest einen Einzelphotonendetektor. Der Einzelphotonendetektor hat eine Nachweisfläche mit einem Durchmesser von größer oder gleich 3 mm, bevorzugt größer oder gleich 5 mm, bevorzugt größer oder gleich 10 mm. In vorteilhafter Weise kann hiermit eine hohe Nachweiseffizienz erzielt werden.

Der Einzelphotonendetektor kann z.B. als Sekundärelektronenvervielfacher, sogenannter Photomultiplier, insbesondere als ein sogenannter customized Photomultiplier (CPM) umfasst sein. Auch Avalanche-Photodioden, Multipixelphoton-Counter oder andere Detektorsysteme können zum Einsatz kommen.

Vorzugsweise wird der Primärlichtstrahl als kollimierter Strahl oder Parallelstrahl, d.h. mit einem kleinen Aperturwinkel, also insbesondere nicht auf einen Punkt fokussiert durch das Medium gestrahlt. Dadurch kann das Sekundärlicht in gleicher Weise entlang der gesamten Strahlachse mittels der Multilichtleiter-Lateralsonde gesammelt und dem wellenlängenselektiven Element bzw. der Detektoreinrichtung zugeführt werden.

Die Lichtquelle ist vorzugsweise zumindest schmalbandig und gut ausrichtbar. Diese beiden Eigenschaften sind durch einen Laser gegeben. Daher wird insbesondere ein Laser als Lichtquelle zur Erzeugung des Primärlichtstrahls verwendet. Allerdings könnten auch eine oder mehrere LEDs verwendet werden.

Wenn ein Laser verwendet wird, liegt ein besonderer Vorteil vor, wenn dessen Leistung unter der ATEX-Grenze für den explosionsgeschützten Bereich liegt. Dann kann das System für diesen Bereich zugelassen werden. Damit kann, wenn der Laserstrahl nicht auf das oder in dem Medium fokussiert wird, die Vorrichtung sogar in explosionsgeschützten Bereichen verwendet werden, bzw. kann eine EX-Zulassung erhalten. Insbesondere hierfür ist es vorteilhaft, wenn der Laser eine Lichtleistung von maximal 1 Milliwatt aufweist. Dann ergeben sich Vorteile im Bereich EX-Zulassung, aber auch ein Schutz der Beeinträchtigung von Menschen durch die Laserstrahlung.

Die Vorrichtung umfasst ferner eine Auswerteeinrichtung, welche dazu ausgebildet ist, ein Ramanspektrum, Fluoreszenzspektrum und/oder Phosphoreszenzspektrum des Sekundärlichts zu erzeugen, auszuwerten, zu verrechnen, zu speichern und ggf. auf einem Monitor darzustellen.

Gegenstand der Erfindung ist auch ein Verfahren zum Nachweisen von Raman-gestreutem, fluoreszentem und/oder phosphoreszentem Sekundärlicht gemäß Anspruch 14, wobei das Verfahren die folgenden Schritte umfasst:
Bereitstellen eines Raman-aktiven, fluoreszenten und/oder phosphoreszenten klaren oder trüben Mediums, ggf. mit einer Konzentration von unter 0,01 Gewichtsprozent an Raman-aktivem, fluoreszentem und phosphoreszentem Material,
Einstrahlen eines Lichtstrahls, insbesondere eines parallelen im wesentlichen unfokussierten Laserstrahls, in das Raman-aktive, fluoreszente und/oder phosphoreszente klare oder trübe Medium entlang einer Strahlachse,
Nachweisen von quer, insbesondere senkrecht, zu der Strahlachse emittiertem Sekundärlicht entlang einer ausgedehnten Messstrecke entlang der Strahlachse, wobei die Länge der Messstrecke erheblich größer ist als der Durchmesser des Lichtstrahls und/oder als der Durchmesser eines Lichtleiters der Sonde. Die Länge der Messstrecke beträgt z.B. mindestens mehrere Millimeter, z.B. mindestens 5 mm oder mindestens 10 mm, vorzugsweise mindestens 20 mm oder mindestens 40 mm.

Gegenstand der Erfindung ist auch die Verwendung zur Überwachung einer Strömung im Bereich einer Kläranlage, z.B. eine Überwachung des Auslaufs oder einer anderen Strömung in, zu oder von einer Kläranlage, insbesondere zur simultanen Überwachung von Nitrat, Ammonium, Phosphat, Sulfat und/oder organischen Bestandteilen in einem Teilstrom der Kläranlage oder anderer Abwässer.

Weitere Anwendungen für die Erfindung finden sich beispielsweise in den Bereichen:
- Automotive: Öl in Wasser, Scale-Inhibitoren, Detektion von Ammonium-Ionen, Nitrat-, Sulfat- und Phosphat-Ionen
- Abwasser: Trübung, Konzentration
- Getränkeindustrie: Trübung, Hefenzahl, Konzentration, Farbe
- Biotechnologie: Proteingehalt, Biomasse, Glucosekonzentration, Kontrolle, Steuerung und Endpunktbestimmung bei Fermentationsprozessen
- Chemie: Konzentrationsbestimmung, Verfolgung und Steuerung von Reaktionsverläufen, physikalische Daten wie Dichte Viskosität, Farbe (APHA, HAZEN)
- Pharma: Qualitätssicherung, Identifikation von Wirkstoffen
- Petrochemie: Wassergehalt, Oktanzahl, Farbe (ASTM)
- Nahrungsmittel: Fettgehalt in Fleisch, CIP-Überwachung, Farbe
- Textil: Farbe, Partikelkonzentration, Phasentrennung
- Trinkwasser: Chlordioxid, Ozon, Trübung, Detektion von Ammonium-Ionen, Nitrat-, Sulfat- und Phosphat-Ionen

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine schematische Seitenansicht einer Küvette mit Multilichtleiter-Lateralsonde einer Vorrichtung gemäß einer beispielhaften Ausführungsform der Erfindung,
- Fig. 2: eine schematische Darstellung eines AOTF und einer Detektoreinrichtung einer Vorrichtung gemäß einer beispielhaften Ausführungsform der Erfindung,
- Fig. 3: eine schematische Schnittdarstellung einer Tauchsonde einer Vorrichtung gemäß einer weiteren beispielhaften Ausführungsform der Erfindung,
- Fig. 4: eine schematische Querschnittsdarstellung einer beispielhaften Abwandlung der Ausführungsform aus Fig. 3,
- Fig. 5: eine schematische Darstellung einer beispielhaften Ausführungsform der erfindungsgemäßen Vorrichtung,
- Fig. 6-14: schematische Querschnittsdarstellungen von bespielhaften Anordnungen von Lichtleitern und Spiegeln um die Küvette bzw. Verspiegelungen der Küvette.

### Detaillierte Beschreibung der Erfindung

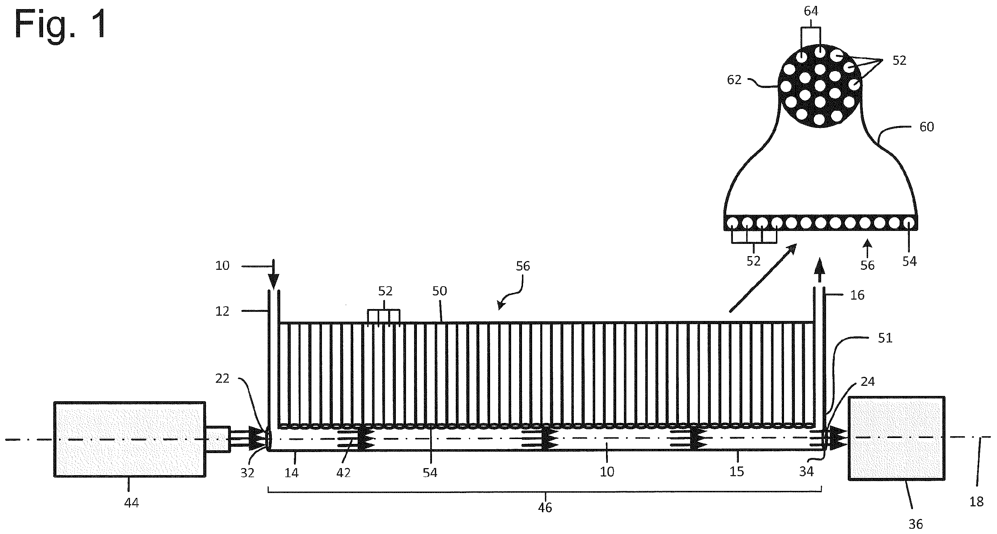

Bezugnehmend auf Fig. 1 wird ein fluides, insbesondere flüssiges oder gasförmiges Medium 10 über eine Mediumszuleitung 12 in eine Küvette 14, in diesem Beispiel eine Küvette aus einem transparenten Material, z.B. aus Glas, geleitet. Das fluide Medium 10, z.B. eine Flüssigkeit oder ein Gas mit Raman-aktiven Inhaltsstoffen, z.B. im Form von Wasser aus einer Probenentnahme einer Kläranlage, fließt durch die sich längs erstreckende Küvette 14 hindurch und tritt an einem Mediumsausgang 16 wieder aus dem System aus, so dass das Medium 10 im Durchflussbetrieb durch die Küvette 14 untersucht werden kann. Die Küvette 14 hat in diesem Beispiel einen (kreis-)runden Querschnitt und erstreckt sich längs entlang einer Strahlachse 18. Die Küvette 14 weist an einem ersten stirnseitigen Ende 22 ein Lichteintrittsfenster 32 auf, durch welches ein Primärlichtstrahl 42 in die Küvette 14 und damit in das Medium 10 in der Küvette 14 eingestrahlt wird. In diesem Beispiel wird der Primärlichtstrahl 42 von einem Laser als Lichtquelle 44 erzeugt und der Laserstrahl 42 wird nicht fokussiert, sondern wird als Parallelstrahl entlang der Strahlachse 18 durch die Küvette 14 hindurchgestrahlt. Der parallele Primärlichtstrahl bzw. parallele Laserstrahl 42 erzeugt somit auf seinem Pfad entlang der Längsachse 18 auf einer ausgedehnten Messstrecke 46 in dem Medium 10 in der Küvette 14 gestreutes Sekundärlicht, z.B. durch Ramanstreuung. Das Raman-gestreute Sekundärlicht wird demnach entlang der ausgedehnten Messstrecke 46 entlang der Strahlachse 18 an jedem Punkt der Messstrecke 46 in alle Raumrichtungen emittiert.

Durch ein Austrittsfenster 34 an einem dem ersten Ende 22 gegenüberliegenden zweiten Ende 24 der Küvette 14 tritt der Primärlichtstrahl 42 wieder aus der Küvette 14 aus und kann in einer Lichtfalle 36, welche in diesem Beispiel koaxial zu dem Primärlichtstrahl 42 angeordnet ist, absorbiert werden. Der Primärlichtstrahl 42 durchstrahlt also die Küvette 14 vom Eintrittsfenster 22 bis zum Austrittsfenster 24 und erzeugt entlang der längs ausgedehnten Messstrecke 46 Sekundärlicht, z.B. durch Ramanstreuung, welches an jedem Punkt der Messstrecke 46 entlang der Strahlachse 18 innerhalb der Küvette mit einer bestimmten Winkelcharakteristik in alle Raumwinkel emittiert wird. An die Küvette 14, welche im vorliegenden Beispiel durch ein transparentes Rohr gebildet wird, ist lateral eine Sondenanordnung 50 in Form einer Multilichtleiter-Lateralsonde angesetzt. Die Multilichtleiter-Lateralsonde 50 umfasst eine Vielzahl von Lichtleitern 52, in diesem Beispiel 51 Lichtleiter 52, welche in einer Reihe entlang der Küvette 14 bzw. entlang der Strahlachse 18 angeordnet sind. Die einzelnen Lichtleiter 52 erstrecken sich dabei im Bereich des Sondenkopfs 51 quer, im vorliegendem Beispiel senkrecht, zur Strahlachse 18, und bilden nebeneinander angeordnet eine längliche Batterie bzw. Reihenanordnung 56, wobei sich die Reihe oder Reihenanordnung 56 als Ganzes wiederum längs entlang der Küvette 14 bzw. entlang der Strahlachse 18 erstreckt. Mit anderen Worten umfasst der Sondenkopf 51 eine Anordnung 56 aus nebeneinander aneinandergereihten, insbesondere großflächigen, Lichtleitern 52, z.B. optischen Fasern.

Jeder Lichtleiter 52 umfasst am Sensorkopf oder Sondenkopf 51 eine Lichteintrittsspitze 54, welche in Kontakt mit der transparenten Seitenwand 15 in Form einer Ringwandung der Küvette 14 steht oder in unmittelbarer Nähe zu dieser angeordnet ist, um denjenigen Anteil des Sekundärlichts aus der Küvette 14 zu empfangen, welcher quer zu der Strahlachse 18 aus dem Medium 10 emittiert wird. Aufgrund der Vielzahl der entlang der Messstrecke 46 angeordneten Lichtleiter 52 in der Reihenanordnung 56 kann eine relativ große Menge an Sekundärlicht mit der Multilichtleiter-Lateralsonde 50 empfangen werden. Im vorliegenden Beispiel sind die Lichtleiter 52 als handelsübliche optische Fasern, z.B. Kunststofffasern mit einem Durchmesser von etwa 1 mm ausgebildet.

Mit anderen Worten wird im Rahmen der hier vorgestellten Erfindung eine spezielle Multilichtleiter-Anordnung aus parallel nebeneinander angeordneten Lichtleitern 52, nämlich in Form einer Reihenanordnung 56 zum Empfangen und Sammeln des Sekundärlichtes verwendet, um eine höhere Nachweisempfindlichkeit gegenüber der Verwendung von nur einer oder einiger weniger optischer Fasern zu erzielen, die lediglich ein kleines im Wesentlichen punktförmiges Probenvolumen erfassen. Dabei wird das fluide Medium 10 als Probe oder ein anderer Anteil eines Produkts durch die Küvette 14 gepumpt oder geleitet, wobei die Küvette 14 ein längliches Probengefäß darstellt. Das mittels der erfindungsgemäßen Sondenanordnung bzw. Sonde 50 erfassbare Probenvolumen erstreckt sich demnach über die längs ausgedehnte Messstrecke 46 längs entlang der Strahlachse 18.

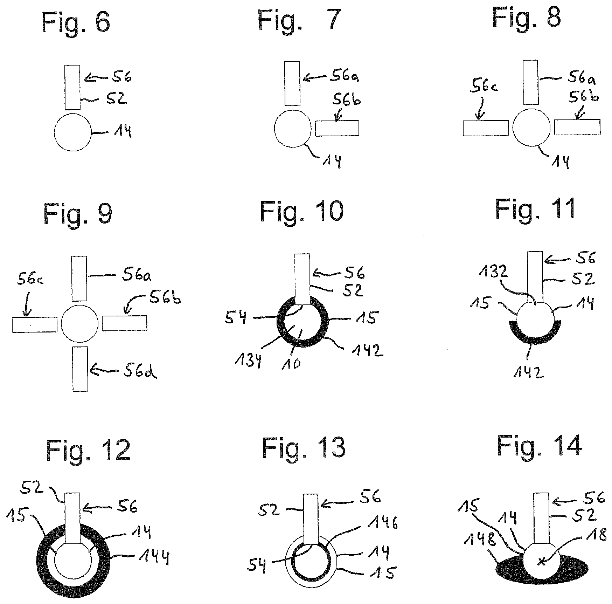

In dem in Fig. 1 dargestellten Beispiel hat die Küvette 14 transparente Wände, es ist jedoch auch denkbar, die Küvette seitlich aufzuschlitzen und die Reihenanordnung 56 aus Lichtleitern 52 in die Seitenwand bzw. Ringwandung 15 der Küvette zu integrieren und abzudichten, so dass die Lichteintrittsspitzen 54 sich unmittelbar in dem Medium 10 in der Küvette 14 befinden (vgl. auch Fig. 10-14).

Verwendet man, wie vorstehend beispielhaft vorgeschlagen wird, einen Laserstrahl als Primärlichtstrahl 42, der durch das Medium 10 geleitet wird, so kann dieser gemäß den üblichen Eigenschaften von Laserstrahlen parallel, also mit einem geringen Aperturwinkel, in das Medium 10 eingestrahlt werden. Selbst einfache Laserpointer lassen sich dergestalt auf relativ weite Strecken nahezu parallel abbilden und können als Primärlichtquelle für den parallelen, insbesondere unfokussierten Primärlichtstrahl 42 geeignet sein. Wie bereits ausgeführt, entsteht längs entlang des Laserstrahls 42 durch die mit dem Medium 10 gefüllte bzw. im vorliegenden Beispiel durchflossene Volumeneinheit in der Küvette 14 oder in dem Behältnis auf dem gesamten Lichtweg Raman-Strahlung. Bisher bekannte Messsonden detektieren typischerweise lediglich ein bestimmtes kleines Volumenelement direkt vor einer Sondenspitze. Bei dem Ausführungsbeispiel gemäß der vorliegenden Erfindung wird nun die Reihenanordnung 56 aus einer Vielzahl von Lichtleitern 52 seitlich, z.B. unter 90 °, oder einem anderen geeigneten Winkel positioniert, so dass die Vielzahl der Lichtleiter 52 in ihrer Gesamtheit eine großflächige Sondenanordnung in Form einer Multilichtleiter-Lateralsonde 50 bilden, dergestalt, dass der Primärlichtstrahl an der sich längs entlang der Strahlachse 18 über die Messstrecke 46 erstreckenden Lichteintrittsfläche der Multilichtleiter-Lateralsonde 50 vorbeileuchtet. So dringt das gestreute Sekundärlicht, z.B. Ramanlicht, welches entlang der längs ausgedehnten Messstrecke 46 in alle Raumwinkel gestreut wird, in alle Lichtleiter 52 ein.

Somit kann mit der vorgestellten großflächigen bzw. großvolumigen Fasersonde 50 aus der Reihenanordnung 56 aus einer Vielzahl von Lichtleitern 52 die Lichtmenge des gesammelten zu detektierenden Sekundärlichts, z.B. Raman-Lichts, mittels der verwendeten Vielzahl von Lichtleitern 52 multipliziert werden.

Oben rechts in Fig. 1 befindet sich eine schematische Darstellung eines Querschnittswandlers 60. Der Querschnittswandler 60 besteht aus den Lichtleitern 52, welche an ihren sondenseitigen Lichteintrittsspitzen 54 die längliche Reihenanordnung 56 des Sondenkopfes 51 bilden. Im Verlauf des Querschnittwandlers 60 werden die Lichtleiter 52 von der länglichen Reihenanordnung 56 zu einer kompakten, im vorliegenden Beispiel im Wesentlichen kreisförmigen, Bündel-Anordnung 62 durch Umordnung der Lichtleiter 52 ungeformt. Der Querschnittswandler 60 besteht demnach aus einer Faser-Anordnung der Lichtleiter 52. Es ist anzumerken, dass die Darstellung des Querschnittswandlers 60 schematisch zu verstehen ist und bei Weitem nicht so viele Lichtleiter 52 wie tatsächlich vorhanden sind, in der Darstellung rechts oben in Fig. 1 auch dargestellt sind. Mit dem Querschnittswandler 60 kann nun die in ihrer Gesamtheit relativ großflächige Querschnittsfläche aller Lichtleiter 52 von der länglichen Reihenanordnung 56 auf eine kompaktere, z.B. kreisförmige, Bündel-Anordnung 62 umgeformt werden, um der Detektoreinrichtung zugeführt werden zu können. Mit anderen Worten wird der Querschnittswandler 60 von dem Bündel von Lichtleitern 52 gebildet, wobei das Bündel von einer sondenseitigen Reihenanordnung 56 zu einer detektorseitig kompakteren Bündel-Anordnung 62 umgeformt wird.

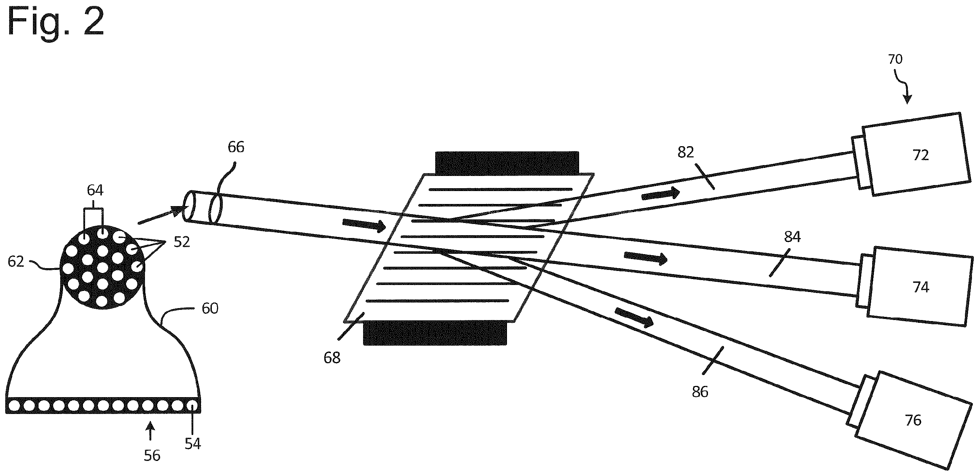

Bezugnehmend auf Fig. 2 wird das mit der Sonde bzw. Sondenanordnung 50 gesammelte Sekundärlicht an detektorseitigen Lichtaustrittsenden 64 aus den Lichtleitern 52 ausgekoppelt und auf ein großflächiges durchstimmbares Filter 68, in diesem Beispiel ein akusto-optisch durchstimmbares Filter (AOTF) 68, gerichtet. Zwischen dem Querschnittswandler 60 und dem AOTF 68 sind noch ein oder mehrere strahlformende Elemente, z.B. eine Linse 66 zur Fokussierung, angeordnet. Das durchstimmbare Filter 68 dispergiert nun das Sekundärlicht, so dass mittels Durchstimmung des Filters 68 das Sekundärlichtspektrum mit einem Detektor 72 einer Detektoreinrichtung 70 aufgenommen werden kann. Bei dem Detektor 72 handelt es sich im vorliegenden Beispiel um einen sogenannten customized Photomultiplier (CPM), welcher einen Strahl erster Ordnung 82 aus dem AOTF 68 detektiert. Der Strahl nullter Ordnung 84 kann von einem Detektor 74 und der andere Strahl erster Ordnung 86 von einem Detektor 76 nachgewiesen werden, was jedoch optional ist. Ferner können weitere optische Elemente, wie z.B. refraktive Elemente oder Blocking Filter eingebaut werden, falls dies z.B. zur Primärlichtunterdrückung sinnvoll oder erwünscht ist.

In vorteilhafter Weise kann also ein großflächiger Nachweisdetektor 72 verwendet werden, welcher nicht durch die kleinen Eintrittsöffnungen von Spektrometern beschränkt ist. Im vorliegenden Beispiel sind die in der Reihenanordnung 56 positionierten Lichtleiter 52 bzw. optischen Fasern 52 der Sonde 50 entlang der ausgedehnten Messstrecke 46 angeordnet und werden am detektorseitigen Ende 64 in einer kompakten Bündel-Anordnung 62, z.B. kreisförmig oder oval, auf das durchstimmbare Filter 68, z.B. ein AOTF oder ein anderweitig durchstimmbares Filter geleitet, um dann auf der großen Nachweisfläche des customized Photomultipliers 72 nachgewiesen zu werden, wodurch eine Steigerung der Nachweisempfindlichkeit erzielt werden kann. Vorliegend ist es möglich, Kunststofffasern als Lichtleiter 52 einzusetzen, z.B. mit einem Durchmesser in der Größenordnung von bis zu 1 mm oder mehr. Solche handelsüblichen Kunststofffasern können in der beschriebenen Reihenanordnung 56 positioniert werden, z.B. wie vorliegend dargestellt, 51 Stück oder mehr oder weniger. Damit wird ein Sondenkopf 51 mit einer Sondeneintrittsfläche mit einer Länge von etwa 51 mm und einer Breite von etwa 1 mm geschaffen, wobei die Zwischenräume zwischen den kreisrunden Fasern in dieser Betrachtung der Einfachheit halber vernachlässigt sind. Diese Reihenanordnung 56 aus z.B. 51 Fasern werden dann zu einem Bündel 62, z.B. einem kreisrunden oder ovalen Bündel umgeformt und das aus der detektorseitigen Licht-Austrittsfläche des Querschnittswandlers 60 austretende Licht wird über die Linse 66 parallelisiert und durchdringt nachfolgend das AOTF 68.

Das AOTF 68 wird also vorzugsweise, aufgrund der Kantensteilheit der Filterung, parallel durchleuchtet und erhält damit eine hohe Güte der Selektivität. Das AOTF 68 selektiert die einzelnen Raman-Wellenlängen aus dem gesammelten Sekundärlicht. Nachfolgend ist der customized Photomultiplier 72 positioniert, welcher als Einzelphotonendetektor mit extrem hoher Nachweisempfindlichkeit das spektralaufgelöste Sekundärlicht detektiert.

Durch diese Anordnung kann eine Querschnittsfläche der Sonde 50 bzw. der Summe der Lichtleiter 52 im genannten Beispiel von etwa 40 mm² erreicht werden. Es sind jedoch durch Anpassung der Anzahl von Lichtleitern 52 bzw. des Durchmessers auch kleinere oder größere Querschnittsflächen, z.B. bis zu 70 mm², 100 mm² oder sogar mehr erreichbar.

Zusammenfassend weist die Detektoreinrichtung 70 demnach das Sekundärlicht mit hoher Nachweisempfindlichkeit nach. Da praktisch jeder einzelne Lichtleiter 52 bzw. jede Faser 52 wie ein eigenes Nachweissystem funktioniert, wird durch die Verwendung einer großen Anzahl von n_{L} Lichtleitern 52 (in diesem Fall n_{L} = 51), die Lichtmenge ver-n_{L}-facht. In einigen Fällen kann sich daraus also eine n_{L}-fach höhere Nachweisempfindlichkeit ergeben oder eine eben noch höhere Nachweisempfindlichkeit bei Verwendung einer noch größeren Zahl n_{L} von Lichtleitern oder noch größeren Durchmessern von Lichtleitern 52. In anderen Fällen, so z.B., wenn Fluoreszenz mit auftritt, kann über Fehlerfortpflanzung berechnet werden, welche tatsächlichen Erhöhungen der Nachweisgrenzen sich ergeben. Der Effekt basiert auf der geringen Absorption des Lichtstrahls, vor allem in klaren Medien, im Bereich der Ramanspektroskopie. Dadurch werden, wie hier, sehr lange Lichtwege und damit eine sehr lange Messstrecke 46 möglich. Dieser Vorteil kommt besonders zum Tragen, wenn wie hier ein großflächiges durchstimmbares Filter 68, z.B. ein AOTF, eingesetzt wird und ein großflächiger, sehr empfindlicher Detektor zur Verfügung steht, wie im vorliegenden Beispiel ein customized Photomultiplier 72. Die Verwendung eines großflächigen AOTF 68 und eines customized Photomultiplier 72 ist zwar im Rahmen des vorliegenden Ausführungsbeispiels besonders vorteilhaft, im Rahmen der Erfindung in ihrer Allgemeinheit aber optional. Als Photomultiplier kommen z.B. MPPC-Module der C13366-Serie, der Photonenzählkopf H12775 oder Photonenzählköpfe der H7421-Serie von Hamamatsu (vgl. www.hamamatsu.com) oder Customized-Photon-Multiplier-Modul-Köpfe der Serien PV-HM 9XZ / 13XZ / 19XZ in Betracht.

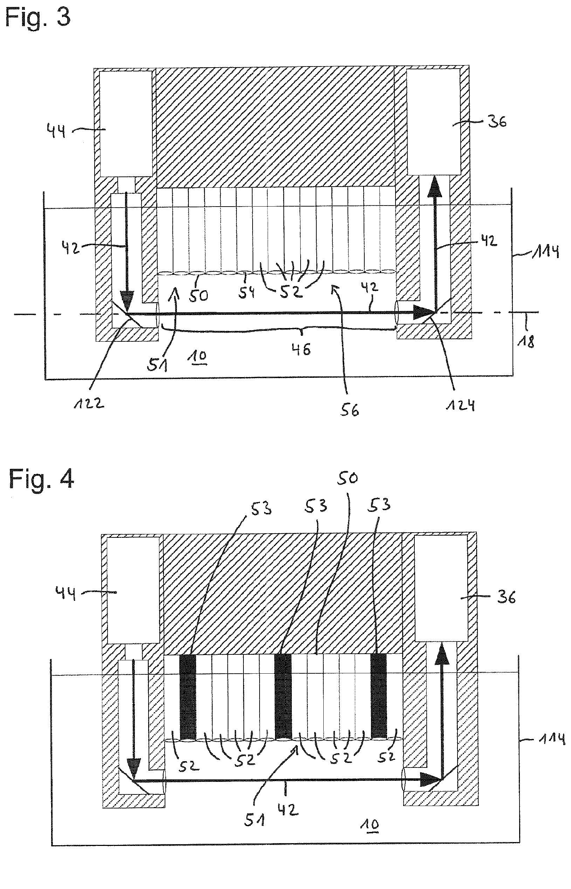

Bezugnehmend auf Fig. 3 und 4 kann die Sonde 50 auch als Immersions- oder Tauchsonde ausgebildet sein. In diesem Fall befindet sich das Medium 10 in einem offenen Gefäß 114 und die Sonde 50 bzw. der Sondenkopf 51 wird mit den Lichteintrittsspitzen 54 in das Medium 10 eingetaucht. Der Primärlichtstrahl 42 wird in dem Beispiel aus dem Laser 44 in das Medium 10 eingestrahlt und mit einem Eintrittsspiegel 122 auf die Strahlachse 18 gespiegelt. Der Abschnitt des Primärlichtstrahls 42, welcher durch das Medium 10 hindurchgestrahlt wird, durchläuft also ebenfalls eine ausgedehnte Messstrecke 46 mit einer Länge von in diesem Beispiel mehreren Zentimetern. Auch diese Sonde 50, die in Form einer Tauchsonde ausgebildet ist, weist eine Reihenanordnung 56 aus einer Vielzahl von Lichtleitern 52 auf, von denen hier schematisch 15 Stück dargestellt sind. Es ist dem Fachmann ersichtlich, dass es auch eine größere oder kleinere Anzahl von am Sondenkopf 51 nebeneinander angeordneten Lichtleitern 52 in der Reihenanordnung 56 sein können. Der Primärlichtstrahl 42 wird über einen Austrittsspiegel 124 wieder nach oben gespiegelt, um in der Lichtfalle 36 absorbiert zu werden. Auch in diesem Beispiel detektiert die Multilichtleiter-Lateralsonde 50 mit der entlang der Strahlachse 18 angeordneten Batterie oder Reihenanordnung 56 aus sich am Sondenkopf 51 quer zur Strahlachse 18 ersteckenden Lichtleitern 52 entlang der ausgedehnten Messstrecke 46 das quer zur Strahlachse 18 emittierte Sekundärlicht.

Bezugnehmend auf Fig. 4 ist eine Abwandlung der Tauchsonde aus Fig. 3 dargestellt, bei welcher intermittierend zwischen einer Mehrzahl von Lichtleitern 52 Signalkorrektur-Lichtleiter 53 angeordnet sind. Durch die intermittierende Anordnung der zusätzlichen Signalkorrektur-Lichtleiter 53 in bestimmten Abständen entlang der Strahlachse 18 kann die Trübung des Mediums 10, bzw. die Absorption in dem Medium 10 bestimmt werden und damit eine Signalkorrektur der Raman-Messung durchgeführt werden. Dies ist insbesondere bei trüben Medien vorteilhaft, wenn entlang der längs ausgedehnten Messstrecke 46 mit einer signifikanten Absorption des Primärlichtstrahls gerechnet werden muss. Kommt es zu einer solchen signifikanten Absorption des Primärlichtstrahls 42, fällt auch das Raman-Signal entlang der Messstrecke 46 ab, so dass die Lichtleiter 52, die weiter vom Lichteintrittsfenster 32 bzw. vom Eintrittsspiegel 122 entfernt sind, auch ein schwächeres Ramansignal detektieren. Dieser Effekt kann mittels der Signalkorrektur-Lichtleiter 53 in Form einer Signalkorrektur korrigiert werden.

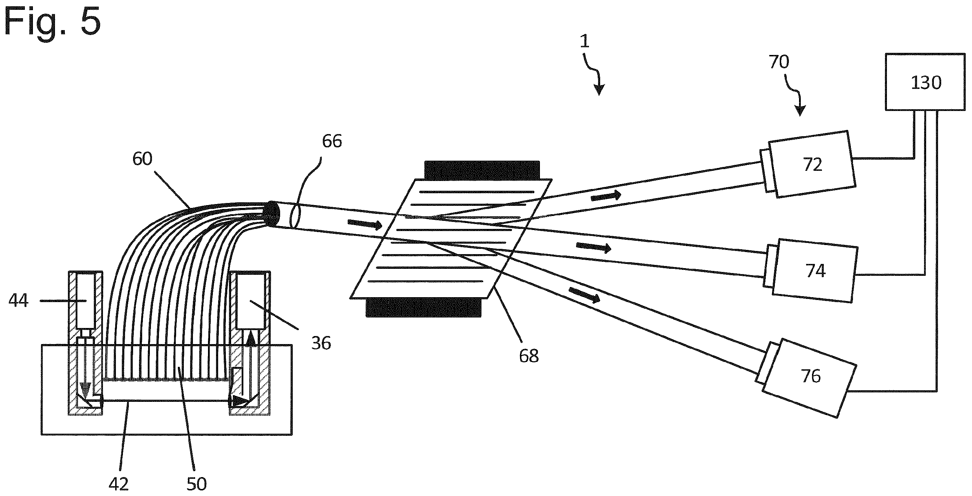

Bezugnehmend auf Fig. 5 ist eine schematische Darstellung der Vorrichtung von der Sonde 50 bis zur Detektoreinrichtung 70 dargestellt. Die Vorrichtung 1 kann eine Auswerteeinrichtung 130, z.B. in Form eines Computers, enthalten, welche die von der Detektoreinrichtung 70 detektierten Signale auswertet und ggf. daraus Raman-Spektren erzeugt und/oder ggf. Signalkorrekturen vornimmt oder sonstige Berechnungen oder weitere Verarbeitungsschritte durchführt.

Bezugnehmend auf die Fig. 6-14 sind schematisch weitere Ausführungsbeispiele dargestellt, mit denen die Nachweiseffizienz der Multilichtleiter-Lateralsonde 50 weiter vergrößert werden kann. Die Fig. 6-14 zeigen dabei schematische Querschnitte durch die Sonde 50 in Zusammenwirkung mit der Küvette 14 aus Fig. 1.

Fig. 6 zeigt eine einzelne Reihenanordnung 56 aus einer Vielzahl von Lichtleitern 52. Bezugnehmend auf die Fig. 7-9 können aber auch mehrere Reihenanordnungen 56a-56d entlang dem Umfang der Küvette 14 um die Küvette 14 herum angeordnet werden. So zeigt die Fig. 7 zwei Reihenanordnungen 56a, 56b, die Fig. 8 drei Reihenanordnungen 56a-56c und die Fig. 9 vier Reihenordnungen 56a-56d, welche z.B. sternförmig um die Küvette 14 herum angeordnet sind. Dabei enthält jede Reihenanordnung 56a, 56b, 56c und/oder 56d wiederrum eine Vielzahl von längs entlang der Messstrecke 46 bzw. entlang der Strahlachse 18 nebeneinander angeordneten Lichtleitern 52, was in der schematischen Darstellung der Einfachheit halber nicht dargestellt ist. Die Fig. 9 repräsentiert demnach vier Reihenanordnungen 56a-56d oder Batterien an Lichtleitern 52 mit jeweils z.B. 51 Lichtleitern in einer sternförmigen Anordnung um die Küvette 14 herum, so dass insgesamt 204 Lichtleiter in den mehreren Reihenanordnungen 56a-56d vorhanden sind, was die Nachweiseffizienz gegenüber der Anordnung in Fig. 6 nochmals vervierfacht.

Die Fig. 10-14 zeigen schematische Darstellungen von weiteren Ausführungsbeispielen, mit welchen die Nachweiseffizienz weiter erhöht werden kann. Diese Beispiele umfassen jeweils eine Reihenanordnung 56 aus einer Vielzahl von Lichtleitern 52, wie z.B. in Fig. 1 und Fig. 6 dargestellt. Bei den Ausführungsformen der Fig. 10-14 hat die Küvette 14 an ihrer Seitenwand bzw. Ringwandung 15 eine sich längs entlang der Messstrecke 46 bzw. der Strahlachse 18 erstreckende Öffnung 132 in Form eines Schlitzes und die Lichtleiter 52 dringen durch den Schlitz durch die Seitenwand bzw. Ringwandung 15 ins Innere 134 der Küvette 14 und damit in das Medium 10 ein, so dass die Lichteintrittsspitzen 54 sich im Inneren 134 der Küvette 14 und damit unmittelbar in dem Medium 10 befinden.

Bezugnehmend auf Fig. 10 ist die Seitenwand bzw. Ringwandung 15 der Küvette 14 mit einer Verspiegelung 142 versehen, welche das in verschiedene Radialwinkel bzw. Azimutwinkel emittierte Sekundärlicht zumindest teilweise auf die Lichteintrittsspitzen 54 der Lichtleiter 52 zurückwirft. Damit kann die Nachweiseffizienz weiter erhöht werden.

Bezugnehmend auf Fig. 11 kann die Verspiegelung 142 auch nur einen Teil des Umfangs der Küvette 14 betreffen.

Bezugnehmend auf Fig. 12 kann die Küvette 14 auch von einem zylinderförmigen Hohlspiegel 144 umgeben sein, welcher wie die Verspiegelung 142 an den Stellen, an denen das Licht in die Lichtleiter 52 ausgekoppelt wird, ausgespart ist.

Bezugnehmend auf Fig. 13 kann die Küvette 14 auch mit einer Innenverspiegelung 146 versehen sein.

Bezugnehmend auf Fig. 14 kann der Spiegel 148 im Querschnitt eine elliptische Form aufweisen, wobei die Strahlachse des Primärlichtstrahls 42 einerseits und die Lichteintrittsspitzen 54 andererseits jeweils in den beiden Brennpunkten der Ellipse angeordnet sind. Dadurch kann das entlang der Strahlachse 18 emittierte Sekundärlicht besonderes effizient auf die Lichteintrittsspitzen 54 fokussiert werden, um eine hohe Nachweiseffizienz zu erzielen.

Mit den schematisch dargestellten Verspiegelungen oder Spiegeln kann der Nachweiseffekt demnach noch weiter verstärkt werden, da Sekundärlicht, welches in andere Azimutwinkel gestreut wird zusätzlich, ggf. sogar größtenteils, auf die Lichteinfallspitzen 54 der Lichtleiter 52 abgebildet wird.

Zusätzlich oder alternativ zu einer Absenkung der Nachweisgrenze kann auch die Primärlichtleistung verringert werden, d.h. es können z.B. schwache Laser verwendet werden. Bisher kamen bei Raman-Anwendungen typischerweise Laser mit einer Leistung von z.B. 300 mW zum Einsatz. Durch die erfindungsgemäße Steigerung der Nachweiseffizienz kann es möglich werden, einen Laser 44 oder eine andere Primärlichtquelle mit einer Leistung von z.B. einem Milliwatt einzusetzen. Dies führt zum Schutz des Nutzers und zum leichteren Einsatz der Vorrichtung, z.B. im medizinischen Bereich, oder allen Bereichen, bei denen Menschen in die Nähe des Primärlichts bzw. der Sonde 50 kommen.

Eine interessante Anwendung der Erfindung liegt in der Überwachung von Teilströmen von Kläranlagen. Hier sind Reste von Nitrat, Ammonium, Phosphat und Sulfat zu sehen. Um die Umwelt, insbesondere Flüsse und Bäche vor Fehlsteuerungen und Betriebsstörungen der Kläranlage zu schützen kann es vorteilhaft sein, eine Vorrichtung gemäß der hier vorgestellten Erfindung am Auslauf oder einer anderen Stelle einer Kläranlage zu installieren. Die Vorrichtung kann dabei sekundärlichtsspektrumsseitig auf das Ramanspektrum der vier genannten Salze vorkonfiguriert werden, so dass die vier genannten Salze mit ihrem eigenen Spektralbereich von der Vorrichtung unterschieden und damit gleichzeitig mittels des jeweiligen Ramanspektrums überwacht werden können. Es können demnach simultan die Stoffe Nitrat, Ammonium, Phosphat, Sulfat und Organik online optisch gemessen und kontinuierliche Messwerte ausgegeben werden. Auch die simultane Detektion von bis 8 Analyten erscheint möglich. Entgegen der Erwartung, dass optische Messgeräte im harten Kläranlagenbetrieb anfällig sein könnten, ist ein kontinuierliches Monitoring mit z.B. nur zwei Wartungseingriffen pro Jahr denkbar.

Die Sonde 50 kann gemäß IP67 ausgeführt sein.

Vergleicht man die hier vorgeschlagene Vorrichtung mit einem handelsüblichen Raman-Spektrometer bzw. Raman-Photometer mit fokussierenden Sonden bzw. konventionellen Rückstreusonden, so sind diese stark anfällig für dämpfende Prozesse im Medium und verlieren schnell an Sensibilität und erfassen nur kleinste Proben voluminar. Eine konventionelle Sonde hat eine Nachweisfläche von größenordnungsmäßig 0,2 mm². Verwendet man bei der vorliegenden Erfindung vier Reihenanordnungen (vgl. Fig. 9) mit jeweils 300 Lichtleitern 52 mit einem Durchmesser von jeweils 400 µm, ergibt sich eine Nachweisfläche von etwa 150 mm². Damit ist theoretisch eine Steigerung der Nachweiseffizienz gegenüber der sogenannten "Blümchensonde" um einen Faktor von etwa 800 möglich.

Die Steigerung der Nachweisempfindlichkeit gegenüber einem konventionellen Raman-Spektrometersystem ist abhängig von der Detektorfläche bzw. im konventionellen System von der Größe des Detektoreingangsspaltes. Gegenüber einem typischen konventionellen Spektrometer mit einem Eingangsspalt von z.B. 600 µm ist eine Steigerung der Nachweiseffizienz ebenfalls um einen Faktor von mehreren Hundert oder mehr möglich. Größere Detektorflächen und damit einhergehende, noch höhere Sensitivitätssteigerungen sind technisch realisierbar.

Gegebenenfalls kann die Vorrichtung sogar so empfindlich ausgestaltet sein, dass auch Anti-Stokes-Linien nachgewiesen werden können.

Zusammenfassend sind die Vorteile der vorliegenden Erfindung eine hohe Nachweisempfindlichkeit, ein einfacher Aufbau, geringe Kosten und/oder eine geringe Laserleistung und damit geringere Sicherheitsanforderungen. Durch die Verwendung einer großen Detektionsfläche kann das Messvolumen zu einem großen Teil auf den Detektor abgebildet werden.

In vorteilhafter Weise kann ggf. sogar eine EX-Zulassung der Vorrichtung erreicht werden, insbesondere wenn der Primärlichtstrahl nicht zusätzlich fokussiert wird und in der Primärlichtfalle 36 absorbiert wird. Als Laser kommen z.B. Laser der Serien LBN-L50 oder LBD-L50 von Tippkemper / Matrix elektronik AG in Betracht (vgl. www.tippkemper-matrix.com).

Ferner kann der Detektor 72 zur Signalerfassung für das Raman-gestreute Sekundärlicht durch weitere Detektoren, z.B. bei zusätzliche Transmissions- bzw. Absorptionsmessungen ergänzt werden.

Auch Spiegel oder der Einsatz von innenverspiegelten Hohlleitern als Küvette 14, wie dies in Fig. 10-14 schematisch dargestellt ist, können weiter zur Effizienzsteigerung beitragen.

Gegebenenfalls kann durch den Einsatz eines hyperspektralen Filters zusätzlich die Ortsinformation und damit die Information eines Lichtleiters 52 auch einzeln detektiert werden. Hierbei kann auch ein Multiplexing-Betrieb vorgesehen sein.

Ferner können durchstimmbare Laser oder RGB-Laser zur Mehrwellenlängenanregung verwendet werden. Auch der Einsatz mehrerer Laserdioden als Backup in einem Laser oder ein gegenüberliegender Laser, der als Backup oder als weitere Primärlichtanregung dient, sind grundsätzlich möglich.

Zusammenfassend wird im Rahmen der hier vorgestellten Ausführungsbeispiele ein quer zur Einstrahlrichtung länglich ausgedehnter Sensorkopf als Reihenanordnung der optischen Fasern, mit anderen Worten eine Anordnung aus in Reihe positionierten Faser-Sensoren, insbesondere mit einem CPM verwendet. Damit ist eine höhere Nachweisempfindlichkeit gegenüber den bisher bekannten Raman-Messgeräten zu erwarten. Eine Probe des zu messenden Fluids wird insbesondere durch ein geeignetes Probengefäß, z.B. eine Mess-Küvette 14 geleitet, welche z.B. über transparente Wände 15 verfügt. Der Sondenkopf 51 kann auch in die Küvetten-Wand 15 integriert oder als Immersionssonde ausgebildet sein.

Verwendet man einen Laserstrahl 42, der in das Medium 10 geleitet wird, so kann man diesen gemäß den üblichen Eigenschaften von Laser-Strahlen parallel, d.h. mit einem geringen Apertur-Winkel in die Probe einstrahlen. Selbst einfache Laser 44 lassen sich auf weite Strecken nahezu parallel abbilden. Schickt man den Laserstrahl längs durch das Medium 10 als ein Raman-aktives Probenvolumen, so entsteht auf dem gesamten Weg Raman-Strahlung, welche entlang einer gewissen Länge 46 entlang der Strahlachse 18 gesammelt und ausgewertet wird.

Es ist für den Fachmann ersichtlich, dass die vorstehend beschriebenen Ausführungsformen beispielhaft zu verstehen sind und die Erfindung nicht auf diese beschränkt ist, sondern im Rahmen des Schutzbereichs der Ansprüche in vielfältiger Weise variiert werden kann.

## Patentansprüche

1. Vorrichtung (1) zur Messung von in einem Medium (10), insbesondere in einem trüben oder klaren Medium (10), gestreutem Sekundärlicht, umfassend:
eine Lichtquelle (44) zur Erzeugung eines Primärlichtstrahls (42) zum Einstrahlen in das zu untersuchende Medium (10) entlang einer Strahlachse (18) des Primärlichtstrahls (42), um mit dem Primärlichtstrahl (42) entlang der Strahlachse (18) Lichtstreuung in dem Medium (10), insbesondere Ramanstreuung, Fluoreszenz und/oder Phosphoreszenz, anzuregen, so dass das Medium (10) aufgrund der Lichtstreuung entlang der Strahlachse (18) Sekundärlicht in einem Sekundärlicht-Spektrum emittiert,
eine Sondenanordnung (50) zum Empfangen und Weiterleiten des entlang der Strahlachse (18) emittierten Sekundärlichtes,
wobei die Sondenanordnung (50) eine Mehrzahl von Lichtleitern (52) umfasst, welche an ihren Lichteintrittsspitzen (54) quer zur Strahlachse (18) des Primärlichtstrahls (42) verlaufen und nebeneinander in einer länglichen Reihenanordnung (56) entlang der Strahlachse (18) angeordnet sind, so dass eine sich linear entlang der Strahlachse (18) erstreckende Gesamt-Lichteintrittsfläche der Lichteintrittsspitzen (54) gebildet wird,
eine Detektoreinrichtung (70) zum Nachweis des von der Mehrzahl der Lichtleiter (52) gesammelten und der Detektoreinrichtung (70) zugeführten Sekundärlichts, wobei die Detektoreinrichtung (70) zumindest einen Einzelphotonendetektor (72, 74, 76) aufweist, wobei
ein durchstimmbares Filter (68) als wellenlängenselektives Element umfasst ist, welches das Sekundärlicht örtlich dispergiert, so dass mittels Durchstimmung des Filters das Sekundärlicht mittels der Detektoreinrichtung (70) wellenlängenselektiv nachweisbar ist, um zumindest einen Teil des Sekundärlichtspektrums abzubilden,
die Lichtleiter (52) als Hohlleiter oder Kunststofffasern ausgebildet sind,
die Gesamtquerschnittsfläche aller Lichtleiter (52) zusammen mindestens 10 mm² beträgt,
die Lichtleiter (52) einen Querschnittswandler (60) bilden und im Verlauf des Querschnittwandlers (60) die Lichtleiter (52) von der länglichen Reihenanordnung (56) zu einer kompakten Bündel-Anordnung (62) durch Umordnung der Lichtleiter (52) umgeformt werden, wobei sich die sich linear entlang der Strahlachse (18) erstreckende Gesamt-Lichteintrittsfläche der Lichteintrittsspitzen (54) in eine zweidimensionale Gesamtfläche mit größerer Breite und geringerer Länge als die lineare Gesamt-Lichteintrittsfläche umformt,
das mit der Sondenanordnung (50) gesammelte Sekundärlicht an detektorseitigen Lichtaustrittsenden (64) aus den Lichtleitern (52) ausgekoppelt und auf das durchstimmbare Filter (68) gerichtet wird,
zwischen dem Querschnittswandler (60) und dem durchstimmbaren Filter (68) ein oder mehrere strahlformende Elemente angeordnet sind und
der Einzelphotonendetektor (72, 74, 76) eine Nachweisfläche mit einem Durchmesser von größer oder gleich 3 mm hat.

2. Vorrichtung (1) nach Anspruch 1,
wobei die Lichtleiter (52) jeweils einen Lichtleiter-Durchmesser von mindestens 100 µm, vorzugsweise mindestens 200 µm, vorzugsweise mindestens 500 µm aufweisen.

3. Vorrichtung (1) nach einem der vorstehenden Ansprüche,
wobei zumindest 5, vorzugsweise zumindest 10, vorzugsweise zumindest 25 Lichtleiter (52) nebeneinander in Reihe (56) entlang der Strahlachse (18) angeordnet sind.

4. Vorrichtung (1) nach einem der vorstehenden Ansprüche,
wobei die Gesamtquerschnittsfläche aller Lichtleiter (52) zusammen mindestens 20 mm², vorzugsweise mindestens 40 mm² beträgt.

5. Vorrichtung (1) nach einem der vorstehenden Ansprüche, wobei das zu untersuchende Medium (10) ein fluides Medium ist, ferner umfassend
eine Küvette (14) mit einem Fluideingang (12) und einem Fluidausgang (16), so dass das zu untersuchende fluide Medium (10) durch die Küvette (14) leitbar ist und der Primärlichtstrahl (42) durch die Küvette (14) strahlbar ist, so dass das durch die Küvette (14) geleitete fluide Medium (10) im Durchfluss durch die Küvette (14) von dem Primärlichtstrahl (42) durchstrahlt wird,
insbesondere wobei die Küvette (14) an einem ersten Ende (22) ein Primärlichtstrahleintrittsfenster (32) und/oder an einem dem ersten Ende (22) gegenüberliegenden zweiten Ende (24) ein Primärlichtstrahlaustrittsfenster (34) umfasst, durch welche der Primärlichtstrahl (42) in die Küvette (14) eintreten und/oder aus der Küvette (14) wieder austreten kann.

6. Vorrichtung (1) nach Anspruch 5,
wobei die Küvette (14) eine Seitenwand (15) oder ein sich entlang der Strahlachse (18) erstreckendes Fenster aus einem transparenten oder transluzenten Material umfasst, so dass das Sekundärlicht durch die Seitenwand (15) bzw. das Fenster aus der Küvette (14) nach außen treten kann und wobei die Sondenanordnung (50) außerhalb an der Küvette (14) angeordnet ist, um das durch die Seitenwand (15) bzw. das Fenster austretende Sekundärlicht aufzufangen oder
wobei die Küvette (14) eine seitliche Öffnung (132) umfasst und die Lichtleiter (52) durch die seitliche Öffnung (132) ins Innere (134) der Küvette (14) ragen, so dass die Lichteintrittsspitzen (54) der Lichtleiter (52) sich unmittelbar in dem fluiden Medium (10) befinden, um das in dem fluiden Medium (10) erzeugte Sekundärlicht unmittelbar aufzufangen.

7. Vorrichtung (1) nach einem der Ansprüche 1-4, wobei das zu untersuchende Medium (10) ein fluides Medium ist, ferner umfassend
ein Tauchgefäß (114), in welchem sich das fluide Medium (10) befindet und wobei die Sondenanordnung (50) als eine Tauchsonde ausgebildet ist, um die Lichteintrittsspitzen (54) innerhalb des Tauchgefäßes (114) in das fluide Medium (10) einzutauchen und das in dem fluiden Medium (10) erzeugte Sekundärlicht unmittelbar aufzufangen.

8. Vorrichtung (1) nach Anspruch 5 oder 6,
wobei ein zylindrischer Hohlspiegel (144,148) umfasst ist, welcher entlang der Küvette (14) angeordnet ist, um das aus der Küvette (14) in verschiedene radiale Richtungen austretende Sekundärlicht auf die Lichteintrittsspitzen (54) der Lichtleiter (52) zu fokussieren, oder wobei die Küvette (14) teilweise verspiegelt ist (142,146),
insbesondere wobei der zylindrische Hohlspiegel (148) oder die verspiegelte Küvette (14) quer zur Strahlachse einen elliptischen Querschnitt aufweisen und die Strahlachse (18) und/oder die Lichteintrittsspitzen (54) der Lichtleiter (52) in den Brennpunkten der Ellipse angeordnet sind.

9. Vorrichtung (1) nach einem der vorstehenden Ansprüche,
wobei das durchstimmbare Filter (68) ein akusto-optisch durchstimmbares Filter (AOTF) ist.

10. Vorrichtung (1) nach einem der vorstehenden Ansprüche,
wobei die Detektoreinrichtung (70) einen oder mehrere Sekundärelektronenvervielfacher (72, 74, 76), insbesondere customized Photomultiplier umfasst.

11. Vorrichtung (1) nach einem der vorstehenden Ansprüche,
wobei der Primärlichtstrahl (42) als Parallelstrahl durch das Medium (10) gestrahlt wird.

12. Vorrichtung (1) nach einem der vorstehenden Ansprüche,
wobei die Lichtquelle (44) als Laser ausgebildet ist und der Laser insbesondere eine Lichtleistung von maximal 1 Milliwatt aufweist.

13. Vorrichtung (1) nach einem der vorstehenden Ansprüche, ferner umfassend
eine Auswerteeinrichtung (130), welche dazu ausgebildet ist, ein Ramanspektrum, Fluoreszenzspektrum und/oder Phosphoreszenzspektrum des Sekundärlichts zu erzeugen.

14. Verfahren zum Nachweisen von Raman-gestreutem, fluoreszentem und/oder phosphoreszentem Sekundärlicht, umfassend die Schritte:
Bereitstellen eines Raman-aktiven, fluoreszenten und/oder phosphoreszenten Mediums (10),
Einstrahlen eines Primärlichtstrahls (42) in das Raman-aktive, fluoreszente und/oder phosphoreszente Medium (10) entlang einer Strahlachse (18),
Nachweisen von quer, insbesondere senkrecht, zu der Strahlachse (18) emittiertem Sekundärlicht entlang einer ausgedehnten Messstrecke (46) entlang der Strahlachse (18) mit einer Sondenanordnung (50) und einer Detektoreinrichtung (70), wobei die Sondenanordnung (50) eine Mehrzahl von Lichtleitern (52) umfasst, welche an ihren Lichteintrittsspitzen (54) quer zur Strahlachse (18) des Primärlichtstrahls (42) verlaufen und nebeneinander in einer länglichen Reihenanordnung (56) entlang der Strahlachse (18) angeordnet sind, so dass eine sich linear entlang der Strahlachse (18) erstreckende Gesamt-Lichteintrittsfläche der Lichteintrittsspitzen (54) gebildet wird, wobei die Lichtleiter (52) einen Querschnittswandler (60) bilden und im Verlauf des Querschnittwandlers (60) die Lichtleiter (52) von der länglichen Reihenanordnung (56) zu einer kompakten Bündel-Anordnung (62) durch Umordnung der Lichtleiter (52) umgeformt werden, wobei sich die sich linear entlang der Strahlachse (18) erstreckende Gesamt-Lichteintrittsfläche der Lichteintrittsspitzen (54) in eine zweidimensionale Gesamtfläche mit größerer Breite und geringerer Länge als die lineare Gesamt-Lichteintrittsfläche umformt,
wobei das mit der Sondenanordnung (50) gesammelte Sekundärlicht an detektorseitigen Lichtaustrittsenden (64) aus den Lichtleitern (52) ausgekoppelt und auf ein durchstimmbares Filter (68) gerichtet wird,
wobei die Lichtleiter (52) als Hohlleiter oder Kunststofffasern ausgebildet sind und die Gesamtquerschnittsfläche aller Lichtleiter (52) zusammen mindestens 10 mm² beträgt,
wobei zwischen dem Querschnittswandler (60) und dem durchstimmbaren Filter (68) ein oder mehrere strahlformende Elemente angeordnet sind,
wobei die Detektoreinrichtung (70) zumindest einen Einzelphotonendetektor (72, 74, 76) aufweist,
wobei der Einzelphotonendetektor (72, 74, 76) eine Nachweisfläche mit einem Durchmesser von größer oder gleich 3 mm hat und
wobei das Sekundärlicht von dem durchstimmbaren Filter (68) als wellenlängenselektivem Element, örtlich dispergiert wird, so dass mittels Durchstimmung des Filters das Sekundärlicht mittels der Detektoreinrichtung (70) wellenlängenselektiv nachgewiesen wird, um zumindest einen Teil des Sekundärlichtspektrums abzubilden.

15. Verwendung der Vorrichtung (1) nach einem der Ansprüche 1-13 und/oder des Verfahrens nach Anspruch 14 zur Überwachung einer Strömung im Bereich einer Kläranlage oder anderer Abwässer, wobei insbesondere Nitrat, Ammonium, Phosphat, Sulfat und/oder organische Bestandteile im Auslauf oder an einer anderen Stelle der Kläranlage überwacht werden.

## Claims

1. A device (1) for measuring secondary light scattered in a medium (10), in particular in a turbid or clear medium (10), comprising:
a light source (44) for generating a primary light beam (42) for irradiating into the medium (10) to be examined along a beam axis (18) of the primary light beam (42), in order to excite light scattering in the medium (10) with the primary light beam (42) along the beam axis (18), in particular Raman scattering, fluorescence and/or phosphorescence, such that the medium (10) emits secondary light in a secondary light spectrum due to the light scattering along the beam axis (18);
a probe arrangement (50) for receiving and forwarding the secondary light emitted along the beam axis (18);
wherein the probe arrangement (50) comprises a plurality of light guides (52) which extend transversely to the beam axis (18) of the primary light beam (42) at their light entry tips (54) and which are arranged next to one another in an elongated row arrangement (56) along the beam axis (18) so as to form an overall light entry area made up of the light entry tips (54) and extending linearly along the beam axis (18);
a detector device (70) for detecting the secondary light collected by the plurality of light guides (52) and supplied to the detector device (70), wherein the detector device (70) comprises at least one single-photon detector (72, 74, 76);
wherein:
a tunable filter (68) is comprised as a wavelength-selective element which spatially disperses the secondary light, such that, by tuning the filter, the secondary light is detectable in a wavelength-selective manner using the detector device (70) in order to map at least part of the secondary light spectrum;
the light guides (52) are in the form of hollow waveguides or plastic fibers;
the total cross-sectional area of all light guides (52) together is at least 10 mm²;
the light guides (52) define a cross-section converter (60) as the cross-section converter (60) is reshaped along its extension by rearranging the light guides (52) from the elongated row arrangement (56) into a compact bundle arrangement (62), thereby reshaping the overall light entry area of the light entry tips (54) extending linearly along the beam axis (18) into a two-dimensional overall area having a greater width and a smaller length than the linear overall light entry area;
the secondary light collected by the probe arrangement (50) is emitted from the light guides (52) at detector-side light exit ends (64) and directed onto the tunable filter (68);
one or more beam-shaping elements are arranged between the cross-section converter (60) and the tunable filter (68); and
the single-photon detector (72, 74, 76) has a detection area with a diameter of greater than or equal to 3 mm.

2. The device (1) according to claim 1,
wherein the light guides (52) each have a light guide diameter of at least 100 µm, preferably at least 200 µm, preferably at least 500 µm.

3. The device (1) according to any one of the preceding claims,
wherein at least 5, preferably at least 10, preferably at least 25 light guides (52) are arranged next to one another in a row (56) along the beam axis (18).

4. The device (1) according to any one of the preceding claims,
wherein the total cross-sectional area of all light guides (52) together is at least 20 mm², preferably at least 40 mm².

5. The device (1) according to any one of the preceding claims, wherein the medium (10) to be examined is a fluid medium, further comprising
a cuvette (14) having a fluid inlet (12) and a fluid outlet (16), such that the fluid medium (10) to be examined can be directed through the cuvette (14) and the primary light beam (42) can be radiated through the cuvette (14), such that the fluid medium (10) directed through the cuvette (14) is irradiated by the primary light beam (42) while flowing through the cuvette (14);
in particular wherein the cuvette (14) comprises a primary light beam entry window (32) at a first end (22) thereof and/or a primary light beam exit window (34) at a second end (24) opposite the first end (22) thereof, through which the primary light beam (42) can enter the cuvette (14) and/or exit the cuvette (14).

6. The device (1) according to claim 5,
wherein the cuvette (14) comprises a side wall (15) or a window extending along the beam axis (18) made of a transparent or translucent material, such that the secondary light can exit the cuvette (14) outward through the side wall (15) or the window, and wherein the probe arrangement (50) is arranged outside on the cuvette (14) in order to capture the secondary light exiting through said side wall (15) or window; or
wherein the cuvette (14) has a lateral opening (132) and the light guides (52) protrude through said lateral opening (132) into the interior (134) of the cuvette (14), such that the light entry tips (54) of the light guides (52) are located directly in the fluid medium (10) in order to directly capture the secondary light generated in the fluid medium (10).

7. The device (1) according to any one of claims 1 - 4, wherein the medium (10) to be examined is a fluid medium, further comprising
an immersion vessel (114) in which the fluid medium (10) is held, and
wherein the probe arrangement (50) is in the form of an immersion probe in order to immerse the light entry tips (54) into the fluid medium (10) within the immersion vessel (114) and to directly capture the secondary light generated in the fluid medium (10).

8. The device (1) according to claim 5 or 6,
wherein a cylindrical concave mirror (144, 148) is comprised, which is arranged along the cuvette (14) in order to focus the secondary light exiting from the cuvette (14) in different radial directions onto the light entry tips (54) of the light guides (52);
or wherein the cuvette (14) is partially mirrored (142, 146);
in particular wherein the cylindrical concave mirror (148) or the mirrored cuvette (14) has an elliptical cross section perpendicular to the beam axis and the beam axis (18) and/or the light entry tips (54) of the light guides (52) are arranged at the focal points of the ellipse.

9. The device (1) according to any one of the preceding claims,
wherein the tunable filter (68) is an acousto-optic tunable filter (AOTF).

10. The device (1) according to any one of the preceding claims,
wherein the detector device (70) comprises one or more secondary electron multipliers (72, 74, 76), in particular customized photomultipliers.

11. The device (1) according to any one of the preceding claims,
wherein the primary light beam (42) is radiated through the medium (10) as a parallel beam.

12. The device (1) according to any one of the preceding claims,
wherein the light source (44) is in the form of a laser and the laser in particular has a light output power of not more than 1 milliwatt.

13. The device (1) according to any one of the preceding claims, further comprising
an evaluation device (130) which is configured to generate a Raman spectrum, fluorescence spectrum and/or phosphorescence spectrum of the secondary light.

14. A method for detecting Raman-scattered, fluorescent and/or phosphorescent secondary light, comprising the steps of:
providing a Raman-active, fluorescent and/or phosphorescent medium (10);
irradiating a primary light beam (42) into the Raman-active, fluorescent and/or phosphorescent medium (10) along a beam axis (18);
detecting secondary light which is emitted transversely, in particular perpendicularly to the beam axis (18) along an elongated measurement path (46) along the beam axis (18) using a probe arrangement (50) and a detector device (70);
wherein the probe arrangement (50) comprises a plurality of light guides (52) which extend transversely to the beam axis (18) of the primary light beam (42) at their light entry tips (54) and which are arranged next to one another in an elongated row arrangement (56) along the beam axis (18) so as to form an overall light entry area made up of the light entry tips (54) and extending linearly along the beam axis (18);
wherein the light guides (52) define a cross-section converter (60) as the cross-section converter (60) is reshaped along its extension by rearranging the light guides (52) from the elongated row arrangement (56) into a compact bundle arrangement (62), thereby reshaping the overall light entry area made up of the light entry tips (54) and extending linearly along the beam axis (18) into a two-dimensional overall area having a greater width and a smaller length than the linear overall light entry area;
wherein the secondary light collected by the probe arrangement (50) is emitted from the light guides (52) at detector-side light exit ends (64) and directed onto a tunable filter (68);
wherein the light guides (52) are in the form of hollow waveguides or plastic fibers and the total cross-sectional area of all light guides (52) together is at least 10 mm²;
wherein one or more beam-shaping elements are arranged between the cross-section converter (60) and the tunable filter (68);
wherein the detector device (70) comprises at least one single-photon detector (72, 74, 76);
wherein the single-photon detector (72, 74, 76) has a detection area with a diameter of greater than or equal to 3 mm; and
wherein the secondary light is spatially dispersed by the tunable filter (68) as a wavelength-selective element, such that, by tuning the filter, the secondary light is detected in a wavelength-selective manner by the detector device (70) in order to map at least part of the secondary light spectrum.

15. Use of the device (1) according to any one of claims 1 - 13 and/or of the method according to claim 14 for monitoring a flow in an area of a sewage plant or of other wastewater, wherein in particular nitrate, ammonium, phosphate, sulfate and/or organic constituents are monitored in the outflow or at another location of the sewage plant.

## Revendications

1. Dispositif (1) pour mesurer de la lumière secondaire diffusée dans un milieu (10), en particulier dans un milieu (10) trouble ou clair, comprenant:
une source de lumière (44) pour générer un faisceau de lumière primaire (42) destiné à être dirigé dans le milieu (10) à examiner le long d'un axe de faisceau (18) du faisceau de lumière primaire (42), afin d'exciter au moyen du faisceau de lumière primaire (42) le long de l'axe de faisceau (18) une diffusion de lumière dans le milieu (10), en particulier une diffusion Raman, une fluorescence et/ou une phosphorescence, de sorte que le milieu (10) émet, en raison de la diffusion de lumière le long de l'axe de faisceau (18), de la lumière secondaire dans un spectre de lumière secondaire,
un agencement de sonde (50) pour recevoir et transmettre la lumière secondaire émise le long de l'axe de faisceau (18),
l'agencement de sonde (50) comprenant une pluralité de guides de lumière (52) qui s'étendent transversalement à l'axe de faisceau (18) du faisceau de lumière primaire (42) à leurs pointes d'entrée de lumière (54) et qui sont disposés côte à côte dans un agencement en rangée allongée (56) le long de l'axe de faisceau (18), de sorte qu'une surface totale d'entrée de lumière des pointes d'entrée de lumière (54) s'étendant linéairement le long de l'axe de faisceau (18) est formée,
un dispositif détecteur (70) pour détecter la lumière secondaire collectée par la pluralité de guides de lumière (52) et fournie au dispositif détecteur (70), le dispositif détecteur (70) comprenant au moins un détecteur à photon unique (72, 74, 76),
dans lequel:
un filtre accordable (68) est compris en tant qu'élément sélectif en longueur d'onde, lequel disperse spatialement la lumière secondaire, de sorte que, par accord du filtre, la lumière secondaire est détectable de manière sélective en longueur d'onde au moyen du dispositif détecteur (70) afin de représenter au moins une partie du spectre de lumière secondaire,
les guides de lumière (52) sont réalisés sous forme de guides creux ou de fibres plastiques, la surface de section transversale totale de tous les guides de lumière (52) ensemble étant d'au moins 10 mm²,
les guides de lumière (52) forment un convertisseur de section transversale (60) et, au cours du convertisseur de section transversale (60), les guides de lumière (52) sont remodelés de l'agencement en rangée allongée (56) à un agencement en faisceau compact (62) par réarrangement des guides de lumière (52), la surface totale d'entrée de lumière des pointes d'entrée de lumière (54) s'étendant linéairement le long de l'axe de faisceau (18) étant remodelée en une surface totale bidimensionnelle ayant une largeur plus grande et une longueur plus petite que la surface totale d'entrée de lumière linéaire,
la lumière secondaire collectée au moyen de l'agencement de sonde (50) est découplée des guides de lumière (52) aux extrémités de sortie de lumière côté détecteur (64) et dirigée sur le filtre accordable (68),
un ou plusieurs éléments de mise en forme du faisceau sont disposés entre le convertisseur de section transversale (60) et le filtre accordable (68), et
le détecteur à photon unique (72, 74, 76) présente une surface de détection avec un diamètre supérieur ou égal à 3 mm.

2. Dispositif (1) selon la revendication 1,
dans lequel les guides de lumière (52) présentent chacun un diamètre de guide de lumière d'au moins 100 µm, de préférence d'au moins 200 µm, de préférence d'au moins 500 µm.

3. Dispositif (1) selon l'une quelconque des revendications précédentes,
dans lequel au moins 5, de préférence au moins 10, de préférence au moins 25 guides de lumière (52) sont disposés côte à côte en une rangée (56) le long de l'axe de faisceau (18).

4. Dispositif (1) selon l'une quelconque des revendications précédentes,
dans lequel la surface de section transversale totale de tous les guides de lumière (52) est d'au moins 20 mm², de préférence d'au moins 40 mm².

5. Dispositif (1) selon l'une quelconque des revendications précédentes, dans lequel le milieu (10) à examiner est un milieu fluide, comprenant en outre
une cuvette (14) présentant une entrée de fluide (12) et une sortie de fluide (16), de sorte que le milieu fluide (10) à examiner est guidable à travers la cuvette (14) et le faisceau de lumière primaire (42) est irradiable à travers la cuvette (14), de sorte que le milieu fluide (10) guidé à travers la cuvette (14) est traversé par le faisceau de lumière primaire (42) lors de son écoulement à travers la cuvette (14),
en particulier dans lequel la cuvette (14) comprend une fenêtre d'entrée du faisceau de lumière primaire (32) à une première extrémité (22) et/ou une fenêtre de sortie du faisceau de lumière primaire (34) à une deuxième extrémité (24) opposée à la première extrémité (22), à travers lesquelles le faisceau de lumière primaire (42) peut entrer dans la cuvette (14) et/ou sortir de la cuvette (14).

6. Dispositif (1) selon la revendication 5,
dans lequel la cuvette (14) comprend une paroi latérale (15) ou une fenêtre s'étendant le long de l'axe de faisceau (18) et réalisée dans un matériau transparent ou translucide, de sorte que la lumière secondaire peut sortir de la cuvette (14) vers l'extérieur à travers la paroi latérale (15) respectivement la fenêtre, et dans lequel l'agencement de sonde (50) est disposé à l'extérieur sur la cuvette (14), afin de capter la lumière secondaire sortant à travers la paroi latérale (15) respectivement la fenêtre, ou
dans lequel la cuvette (14) comprend une ouverture latérale (132) et les guides de lumière (52) font saillie à travers l'ouverture latérale (132) dans l'intérieur (134) de la cuvette (14), de sorte que les pointes d'entrée de lumière (54) des guides de lumière (52) se trouvent directement dans le milieu fluide (10) afin de capter directement la lumière secondaire générée dans le milieu fluide (10).

7. Dispositif (1) selon l'une quelconque des revendications 1 à 4, dans lequel le milieu (10) à examiner est un milieu fluide, comprenant en outre
un récipient d'immersion (114), dans lequel se trouve le milieu fluide (10) et
dans lequel l'agencement de sonde (50) est réalisé sous la forme d'une sonde d'immersion, afin d'immerger les pointes d'entrée de lumière (54) dans le milieu fluide (10) à l'intérieur du récipient d'immersion (114) et de capter directement la lumière secondaire générée dans le milieu fluide (10).

8. Dispositif (1) selon la revendication 5 ou 6,
dans lequel un miroir concave cylindrique (144,148) est compris, lequel est disposé le long de la cuvette (14), afin de focaliser la lumière secondaire sortant de la cuvette (14) dans différentes directions radiales sur les pointes d'entrée de lumière (54) des guides de lumière (52),
ou dans lequel la cuvette (14) est partiellement réfléchissant (142,146),
en particulier dans lequel le miroir concave cylindrique (148) ou la cuvette réfléchissant (14) présentent une section transversale elliptique transversalement à l'axe de faisceau, et dans lequel l'axe de faisceau (18) et/ou les pointes d'entrée de lumière (54) des guides de lumière (52) sont disposés aux foyers de l'ellipse.

9. Dispositif (1) selon l'une quelconque des revendications précédentes,
dans lequel le filtre accordable (68) est un filtre accordable acousto-optique (AOTF).

10. Dispositif (1) selon l'une quelconque des revendications précédentes,
dans lequel le dispositif détecteur (70) comprend un ou plusieurs multiplicateurs d'électrons secondaires (72, 74, 76), en particulier des photomultiplicateurs dédiés à l'application.

11. Dispositif (1) selon l'une quelconque des revendications précédentes,
dans lequel le faisceau de lumière primaire (42) est irradié à travers le milieu (10) sous la forme d'un faisceau parallèle.

12. Dispositif (1) selon l'une quelconque des revendications précédentes,
dans lequel la source de lumière (44) est conçue sous la forme d'un laser et le laser présente en particulier une puissance lumineuse maximale de 1 milliwatt.

13. Dispositif (1) selon l'une quelconque des revendications précédentes, comprenant en outre
un dispositif d'évaluation (130), lequel est conçu pour générer un spectre Raman, un spectre de fluorescence et/ou un spectre de phosphorescence de la lumière secondaire.

14. Procédé pour détecter de la lumière secondaire diffusée Raman, fluorescente et/ou phosphorescente, comprenant les étapes suivantes:
fournir un milieu (10) actif Raman, fluorescent et/ou phosphorescent,
irradier un faisceau de lumière primaire (42) dans le milieu (10) actif Raman, fluorescent et/ou phosphorescent le long d'un axe de faisceau (18),
détecter de la lumière secondaire émise transversalement, en particulier perpendiculairement, à l'axe de faisceau (18) le long d'une trajectoire de mesure allongée (46) le long de l'axe de faisceau (18) au moyen d'un agencement de sonde (50) et d'un dispositif détecteur (70),
dans lequel l'agencement de sonde (50) comprend une pluralité de guides de lumière (52) qui s'étendent transversalement à l'axe de faisceau (18) du faisceau de lumière primaire (42) à leurs pointes d'entrée de lumière (54), et qui sont disposés côte à côte dans un agencement en rangée allongée (56) le long de l'axe de faisceau (18), de sorte qu'une surface totale d'entrée de lumière des pointes d'entrée de lumière (54) s'étendant linéairement le long de l'axe de faisceau (18) est formée,
dans lequel les guides de lumière (52) forment un convertisseur de section transversale (60) et, au cours du convertisseur de section transversale (60), les guides de lumière (52) sont remodelés de l'agencement en rangée allongée (56) à un agencement en faisceau compact (62) par réarrangement des guides de lumière (52), la surface totale d'entrée de lumière des pointes d'entrée de lumière (54) s'étendant linéairement le long de l'axe de faisceau (18) étant remodelée en une surface totale bidimensionnelle ayant une largeur plus grande et une longueur plus petite que la surface totale d'entrée de lumière linéaire,
dans lequel la lumière secondaire collectée au moyen de l'agencement de sonde (50) est découplée des guides de lumière (52) aux extrémités de sortie de lumière côté détecteur (64) et dirigée sur un filtre accordable (68),
dans lequel les guides de lumière (52) sont réalisés sous forme de guides creux ou de fibres plastiques et la surface de section transversale totale de tous les guides de lumière (52) ensemble est d'au moins 10 mm²,
dans lequel un ou plusieurs éléments de mise en forme du faisceau sont disposés entre le convertisseur de section transversale (60) et le filtre accordable (68),
dans lequel le dispositif détecteur (70) comprend au moins un détecteur à photon unique (72, 74, 76),
dans lequel le détecteur à photon unique (72, 74, 76) présente une surface de détection avec un diamètre supérieur ou égal à 3 mm, et
dans lequel la lumière secondaire est dispersée spatialement par le filtre accordable (68) en tant qu'élément sélectif en longueur d'onde, de sorte que, par accord du filtre, la lumière secondaire est détectée de manière sélective en longueur d'onde au moyen du dispositif détecteur (70), afin de représenter au moins une partie du spectre de lumière secondaire.

15. Utilisation du dispositif (1) selon l'une quelconque des revendications 1 à 13 et/ou du procédé selon la revendication 14 pour la surveillance d'un écoulement dans une zone d'une station d'épuration ou d'autres eaux usées, en particulier pour surveiller du nitrate, de l'ammonium, du phosphate, du sulfate et/ou des constituants organiques dans l'effluent ou à un autre endroit de la station d'épuration.
